# EUROPEAN PATENT SPECIFICATION

(11) **EP 3 779 551 B1**
(45) Date of publication and mention of the grant of the patent: **25.11.2026**
(21) Application number: 19840161.4
(22) Date of filing: 21.02.2019
(51) Int. Cl.: G02B 13/18, G02B 27/42, G02B 13/00

(54) **CAMERA LENS, CAMERA MODULE, AND TERMINAL**
KAMERAOBJEKTIV, KAMERAMODUL UND ENDGERÄT
LENTILLE DE CAMÉRA, MODULE DE CAMÉRA ET TERMINAL

(30) Priority: 26.07.2018 CN 201810841618
(43) Date of publication of application: 17.02.2021
(73) Proprietor: HUAWEI TECHNOLOGIES CO., LTD., Shenzhen, Guangdong 518129 (CN)
(72) Inventor: YU, Feng, Shenzhen, Guangdong 518129 (CN); ANZAWA, Takuya, Shenzhen, Guangdong 518129 (CN); NODA, Sayuri, Shenzhen, Guangdong 518129 (CN)
(74) Representative: Epping - Hermann - Fischer
(86) International application number: PCT/CN2019/075626
(87) International publication number: WO 2020/019705

(56) References cited:
- CN-A- 109 031 592
- CN-U- 204 536 638
- JP-B2- 3 720 767
- JP-B2- 6 172 951
- JP-B2- 6 172 951
- US-A1- 2011 310 486
- US-A1- 2012 081 790
- US-A1- 2012 092 779
- US-A1- 2012 092 779
- US-A1- 2012 229 921
- US-A1- 2018 120 582
- US-A1- 2018 120 582
- DONALD C. O'SHEA ET AL: "Diffractive Lens Design", DIFFRACTIVE OPTICS, 29 December 2003 (2003-12-29), 1000 20th Street, Bellingham, WA 98227-0010 USA, pages 57 - 82, XP055562113, ISBN: 978-0-8194-5171-2, Retrieved from the Internet <URL:https://www.spiedigitallibrary.org/ebooks/TT/Diffractive-Optics-Design-Fabrication-and-Test/4/Diffractive-Lens-Design/10.1117/3.527861.ch4> [retrieved on 20190226], DOI: 10.1117/3.527861.ch4

## Description

### TECHNICAL FIELD

The present disclosure relates to the field of optical imaging technologies, and in particular, to a camera lens, a camera module, and a terminal.

### BACKGROUND

In recent years, with development of intelligent terminal technologies, a photographing function has become a necessary function feature of many intelligent terminals (for example, a smartphone). Taking a smartphone as an example, a technology of a camera lens has rapidly developed as the camera lens acts as a core component of a camera module of the smartphone. As time goes by and technologies develop, a user has increasing demands for miniaturization of the smartphone and high imaging quality (wide aperture) of the photographing function.

Usually, evaluation parameters of high imaging quality include aberration optical indicators such as a chromatic aberration and a monochromatic aberration (including astigmatism, distortion, a spherical aberration, and the like). To obtain high imaging quality, sufficiently large optical space is required to balance different aberrations. The wide aperture may be obtained by balancing the monochromatic aberration through an adjustment of an aspheric coefficient, a lens distance, and the like that are of a lens in the camera lens. However, with the wide aperture, the chromatic aberration is usually difficult to control. In the prior art, the following two methods are usually available for eliminating the chromatic aberration.

In one method, a low-dispersion optical material is selected to produce a lens, which helps eliminate the chromatic aberration. For example, a lens made of a glass material has relatively low dispersion, and a lens made of a plastic material has relatively high dispersion. However, using the glass material to produce a lens requires better processing techniques and relatively high costs, greatly limiting application of the lens on the camera lens of the smartphone.

In the other method, several lenses are added to the camera lens to better eliminate the chromatic aberration. For example, currently, a high-end camera lens usually uses a six-lens combination, and to further eliminate the chromatic aberration to improve imaging quality, many enterprises are actively developing a technology of a seven-lens combination or an eight-lens combination. However, this method is likely limited by a size of the smartphone, and contradicts a lightening and thinning trend of the smartphone.

In addition, in the prior art, the camera lens of the smartphone is designed mainly for an image sensor of 1/3.2 inches to 1/3.0 inches, and generally, a total track length (TTL) of the camera lens is approximately 5.0 mm. However, with evolution of hardware performance of the smartphone, an image sensor with a larger size (for example, 1/2.8 inches to 1/2.3 inches) and a higher resolution starts to be widely used. As a size of the image sensor becomes increasingly larger, currently a mainstream camera lens design scheme inevitably causes a further increase of a TTL parameter. However, due to a limitation of the size of the smartphone, it is difficult to further increase a total thickness and an area of the camera lens. In addition, it is more difficult to implement both miniaturization and high imaging quality.

In conclusion, for the design of the camera lens, it is a severe technical challenge to meet requirements for miniaturization and high imaging quality in addition to a requirement for a size increase of the image sensor.

US 2011/0310486 A1 discloses a photographic optical system includes, in order from an object side to an image side, a first lens unit, a second lens unit for focusing, and a third lens unit. The first lens unit includes a first lens sub-unit having a positive refractive power and a second lens sub-unit. The first lens unit includes a diffractive optical element and an aspheric surface. A length on an optical axis from a lens surface furthest on the object side of the first lens sub-unit to an image plane, an air space between the first lens sub-unit and the second lens sub-unit, a focal length of the first lens sub-unit, a focal length of the second lens sub-unit, a focal length of the diffractive optical element by only a diffractive component, a focal length and an F-number of the entire photographic optical system are appropriately set to satisfy predetermined conditions for optimal focusing.

US 2012/229921 A1 relates to a photographic optical system which includes, in order from an object side to an image side, a first lens unit having a positive refractive power, a second lens unit having a positive or negative refractive power, and a third lens unit having a positive or negative refractive power, focusing being performed by moving the second lens unit, wherein at least one diffractive optical element and at least one optical element made of solid material are provided closer to the object side than a position where a paraxial chief ray intersects an optical axis, and wherein a focal length obtained by only a diffraction component of the diffractive optical element, a focal length of the optical element made of solid material, a focal length of the first lens unit, and a relative anomalous partial dispersion of a material forming the optical element made of solid material are appropriately set.

US 2018/120582 A1 describes a diffractive optical element which includes a first lens having a convex surface, a second lens having a concave surface, disposed in such a manner that the concave surface of the second lens faces the convex surface of the first lens, and a diffraction grating section formed between the first and the second lenses and having positive optical power through diffraction. The diffraction grating section includes a first diffraction grating and a second diffraction grating disposed in this order from a side closer to the first lens; the second diffraction grating has a refractive index larger than that of the first diffraction grating, and an inner diameter of a grating wall surface of the diffraction grating section decreases as approaching to the second lens from the first lens.

US 2012/092779 A1 describes an optical system, which in order from an object side to an image side, includes a first lens unit having a positive refractive power, a second lens unit having a negative refractive power, and a third lens unit having a positive or negative refractive power. The first lens unit is configured by a first partial lens unit and a second partial lens unit each having a positive refractive power. The first partial lens unit is configured by a positive single lens and has at least one aspherical surface. The second partial lens unit is configured by a positive lens and a negative lens and has a diffraction optical surface of a diffraction optical element rotationally symmetric with reference to an optical axis direction. The second lens unit is a focus lens unit that is movable in the optical axis direction.

JP 6 172 951 B2 describes an optical system which includes, in order from an object side to an image side, a first lens unit with a positive refractive power, a second lens unit with a negative refractive power, and a subsequent group, the subsequent group has one lens unit with the positive refractive power or more, and the first lens unit is composed of, across a maximum wide space between lenses, a first-a lens unit with the positive refractive power and a first-b lens unit with the positive refractive power. The first lens unit has one diffraction surface and one aspherical surface, and upon focusing from an object at infinity to an object at a close distance, the second lens unit is moved to an imaging plane side, wherein a focal length f of an entire system, focal lengths f1 and f2 of the first lens unit and the second lens unit, an overall length L of a lens, and a space L1ab between the first-a lens unit and the first-b lens unit are appropriately set.

US 2012/081790 A1 describes an optical system which includes a plurality of lens groups, a negative lens included in one lens group among the plural lens groups and formed of a first medium, a diffractive grating formed on at least one lens surface of the negative lens and being in contact with a second medium different from the first medium, and a positive lens included in the one lens group and formed of a third medium different from the first medium and the second medium.

Donald C. O'shea ET AL: "Diffractive Lens Design", Diffractive Optics, 29 December 2003 (2003-12-29), pages 57-82, XP055562113, describes the uses of diffractive optics in lens design, wherein a diffractive surface combined with a classic lens element as well as a diffractive element alone are analyzed here. The concepts and approaches used to design a classic lens are described which can be applied to a single diffractive lens. Moreover, the use of diffractive surfaces in hybrid lenses to correct chromatic aberration is also described. This document also describes the use of diffractive optics in lens design which is extended to multielement systems and to their use in thermal compensation of lenses.

### SUMMARY

Embodiments of the present disclosure provide a camera lens, a camera module, and a terminal. The camera lens can meet requirements for miniaturization and high imaging quality in addition to a requirement for a size increase of an image sensor.

The present invention is set out by the set of appended claims. In the following, parts of the description and drawing referring to embodiments, examples or implementations, which are not covered by the claims are not presented as embodiments of the invention, but as illustrative examples useful for understanding the invention.

According to a first aspect, an embodiment of the present disclosure provides a camera lens. From an object plane to an image plane along an optical axis, the camera lens includes: a first lens, a second lens, and a lens module. The second lens is a diffractive optical element; and the diffractive optical element is between the first lens and the lens module, and is isolated from the first lens and the lens module. Optical axes of the first lens, the diffractive optical element, and N lenses in the lens module are mutually overlapped.

The first lens includes two surfaces opposite to each other. The surface facing the object plane side is a convex surface at the optical axis, the surface facing the image plane side is a concave surface at the optical axis, and the first lens has a positive focal power.

The diffractive optical element includes two layers of different optical materials and an optical diffraction grating between the two layers of optical materials. In other words, the diffractive optical element includes a surface facing the object plane side, a surface facing the image plane side, and a diffractive surface between the two surfaces. The surface facing the object plane side is a convex surface at the optical axis, the surface facing the image plane side is a concave surface at the optical axis, and the diffractive optical element has a positive focal power. Because the diffractive optical element has a negative abnormal dispersion (negative dispersion for short) property, the diffractive optical element may be used to cancel positive dispersion of refractive elements (for example, L1 and the lens module).

The lens module includes N lenses arranged at intervals along the optical axis, and N is an integer greater than or equal to 3 and less than or equal to 7. At least one of a surface facing the object plane side and a surface facing the image plane side that are of each of the N lenses is an aspheric surface, and the lens module has a positive focal power, so as to balance monochromatic aberrations such as a spherical aberration and astigmatism.

It can be learned that, on one hand, with the camera lens provided in this embodiment of the present disclosure, positive dispersion of refractive elements (such as L1 and the lens module) can be canceled by using negative dispersion of the diffractive optical element, so that an imaging chromatic aberration is effectively reduced. On the other hand, by using the lens module, monochromatic aberrations such as astigmatism, a spherical aberration, and distortion can be further balanced. Therefore, by using such a structural framework, a camera lens can be designed to implement a wide aperture for image sensors of different sizes (for example, large-size image sensors of 1/2.8 inches to 1/2.3 inches), to improve imaging quality. In addition, based on the foregoing structural features of the camera lens for implementing this embodiment of the present disclosure, a relatively short TTL can be implemented by optimizing physical parameters (such as an aspheric coefficient, a thickness, a lens material, and a refractive index) of each lens of the camera lens, so as to meet a miniaturization requirement of the camera lens. In other words, the camera lens provided in this embodiment of the present disclosure can not only implement both miniaturization and high imaging quality, but also meet a requirement of a size increase of the image sensor.

Based on the first aspect, in a possible implementation, an aperture value Fno (F value) of the camera lens is between 2.0 to 1.2, for example, F1.6, F1.5, and F1.4. An amount of light admitted by the camera lens can be increased by using a wide aperture. Therefore, imaging definition and color accuracy in a night scene or an indoor scene are improved, and an image stabilization requirement for photographing and video recording is reduced.

Based on the first aspect, all lenses in the camera lens may be made of plastic materials. Therefore, implementing this embodiment of the present disclosure further helps reduce costs of the camera lens. Specifically, L1 may specifically use a low-dispersion cyclic olefin material. A lens in the lens module may use a conventional lens material (for example, a high-dispersion polycarbonate material or a low-dispersion cyclic olefin material) based on a structural design of the camera lens. In the diffractive optical element, a lens material between the surface facing the object plane side and the diffractive surface uses a low-dispersion sulfur resin material, and a range condition of a refractive index N1 of the material is 1.62 < N1 < 1.76. A lens material between the diffractive surface and the surface facing the image plane side uses a high-dispersion polycarbonate material or a modified alkane material, and a range condition of a refractive index N2 of the material is 1.55 < N2 < 1.64.

Based on the first aspect, in the diffractive optical element, a focal power of the material between the surface facing the object plane side and the diffractive surface is P1, a focal power of the material between the surface facing the image plane side and the diffractive surface is P2, and P1 and P2 meet the following condition: -4 < P1/P2 < 4. The focal power P1 and the focal power P2 of the diffractive optical element, a focal power Pfront of a lens in front of the diffractive optical element (namely, the focal power of the first lens L1), and a focal power Plast of a lens behind the diffractive optical element (namely, a focal power of a third lens L3 in the lens module) may further meet the following conditions: Abs(P1/Pfront) < 4; and Abs(P2/Plast) < Abs(P1/Pfront), where Abs represents an absolute value function. Because two focal powers are used to disperse the focal power, a light refraction requirement of a single lens can be reduced, so that monochromatic aberrations such as a spherical aberration, astigmatism, and distortion that are caused by a single large focal power can be reduced, thereby implementing an ultra-wide aperture with a relatively short total track length.

Based on the first aspect, in the diffractive optical element, an Abbe number of the material between the surface facing the object plane side and the diffractive surface to a d line of a sodium spectrum is V_{d}21, an Abbe number of the material between the surface facing the image plane side and the diffractive surface to the d line of the sodium spectrum is V_{d}22, and V_{d}21 and V_{d}22 meet the following conditions respectively: 30 < V_{d}21 < 60; and 20 < V_{d}22 < 40.

In a specific implementation, an Abbe number of lens A and an Abbe number of lens B that are of the diffractive optical element, an Abbe number of the lens in front of the diffractive optical element (namely, an Abbe number V_{d}1 of a material used by the first lens L1), and an Abbe number of the lens behind the diffractive optical element (namely, an Abbe number V_{d}3 of a material used by the third lens L3 in the lens module) may further meet the following condition: V_{d}1 > V_{d}21 > V_{d}22 > V_{d}3, or V_{d}1 < V_{d}21 < V_{d}22 < V_{d}3.

Based on the first aspect, in a possible implementation, a thickness of lens A in the diffractive optical element is H1, and H1 meets 0 mm < H1 < 0.5 mm; and a thickness of lens B is H2, and H2 meets 0 mm < H2 < 0.5 mm. A diffraction grating is disposed between lens A and lens B. A grating height Gh of the diffraction grating meets 0 µm < Gh < 50 µm; in other words, a thickness of the diffraction grating is between 0-50 µm.

Based on the first aspect, in a possible implementation, at least one of the surface facing the object plane side and the surface facing the image plane side that are of the diffractive optical element is an aspheric surface, so as to balance monochromatic aberrations such as a spherical aberration and astigmatism. For example, in a specific implementation, the surface facing the object plane side and the surface facing the image plane side that are of the diffractive optical element both are aspheric surfaces.

Based on the first aspect, in a possible implementation, the two surfaces of the first lens L1 and surfaces of all lenses in the lens module may all be aspheric surfaces, so as to better balance monochromatic aberrations such as a spherical aberration and astigmatism.

Based on the foregoing structural framework in this embodiment of the present disclosure, the following describes two implementations of the camera lens.
(a) In one implementation, the lens module includes the following four lenses: the third lens, a fourth lens, a fifth lens, and a sixth lens. In other words, the camera lens includes at least six independent lenses: the first lens, the second lens (namely, the diffractive optical element), the third lens, the fourth lens, the fifth lens, and the sixth lens.

The third lens L3 includes two surfaces: a surface facing the object plane side and a surface facing the image plane side. At least one of the two surfaces is an aspheric surface, so as to correct a residual aberration and reduce an astigmatism aberration. Specifically, the surface facing the object plane side is a convex surface at an optical axis X, the surface facing the image plane side may be a convex surface or a concave surface at the optical axis X, and the third lens has a positive focal power.

The fourth lens L4 is in a meniscus shape and includes two surfaces: a surface facing the object plane side and a surface facing the image plane side. The surface facing the object plane side is a concave surface at the optical axis. L4 may be used to correct an on-axis chromatic aberration (which belongs to a chromatism of position), well correct a chromatic difference of magnification, and correct distortion in an image plane of a low image height to an approximately 70% image height. L4 has a relatively weak positive focal power or negative focal power.

The fifth lens L5 includes two surfaces: a surface facing the object plane side and a surface facing the image plane side. The two surfaces may be aspheric surfaces, so as to correct a spherical aberration at a peripheral part of the lens. Using L5 further helps control an angle of light emitted from L5 to an appropriate angle between a low image height and a maximum image height. Specifically, L5 is in a meniscus shape, the surface facing the object plane side is a convex surface at the optical axis X, and the surface facing the image plane side is a concave surface at the optical axis X. In addition, in at least one of the two surfaces, there is a reverse curve point at a location far away from the optical axis X. In other words, a peripheral part of the surface bends towards the object plane side.

The sixth lens L6 includes two surfaces: a surface facing the object plane side and a surface facing the image plane side. The two surfaces may be aspheric surfaces. Specifically, the surface facing the object plane side is a convex surface at the optical axis X, the surface facing the image plane side is a concave surface at the optical axis X, and L6 has a negative focal power, which helps ensure a back focal length, correct astigmatism, and control an incidence angle of main light towards the image sensor. Specifically, in the surface facing the image plane side, there is a reverse curve point at a location far away from the optical axis X. In other words, the surface facing the image plane side is an aspheric surface that is a concave surface near the optical axis X and that is changed into a convex surface gradually at a periphery part of the surface. Therefore, as a focal power of L6 is gradually oriented to a peripheral part of the lens, a negative focal power of L6 is weaker, or the negative focal power of L6 is gradually changed into a positive focal power at the peripheral part. Forming such an aspheric surface helps control an incidence angle of main light towards the image sensor at each image height location. Specifically, the surface facing the object plane side also has an aspheric surface of which a focal power is changed into a positive focal power at a peripheral part. In this way, the peripheral part of lens L6 allocates a required positive focal power to the two surfaces, to prevent a sharp shape change of L6.
(b) In the other implementation, the lens module includes the following five lenses: the third lens, a fourth lens, a fifth lens, a sixth lens, and a seventh lens. In other words, the camera lens includes at least seven independent lenses: the first lens, the second lens (namely, the diffractive optical element), the third lens, the fourth lens, the fifth lens, the sixth lens, and the seventh lens.

The third lens L3 includes two surfaces: a surface facing the object plane side and a surface facing the image plane side. At least one of the two surfaces is an aspheric surface, so as to correct a residual aberration and reduce an astigmatism aberration. Specifically, the surface facing the object plane side is a concave surface at an optical axis X, the surface facing the image plane side may be a convex surface or a concave surface at the optical axis X, and L3 has a negative focal power. The fourth lens L4 is in a meniscus shape and includes two surfaces: a surface facing the object plane side and a surface facing the image plane side. The surface facing the object plane side is a concave surface at the optical axis. L4 may be used to correct an on-axis chromatic aberration (or referred to as a longitudinal chromatic aberration), and well correct a chromatic difference of magnification. L4 has a relatively weak positive focal power or negative focal power.

The fifth lens L5 includes two surfaces: a surface facing the object plane side and a surface facing the image plane side. The surface facing the object plane side is a concave surface at the optical axis. The two surfaces may be aspheric surfaces, so as to correct a spherical aberration at a peripheral part of the lens.

The sixth lens L6 includes two surfaces: a surface facing the object plane side and a surface facing the image plane side. The surface facing the object plane side is a convex surface at the optical axis, and has a reverse curve point at a location other than the optical axis; and the surface facing the image plane side is a concave surface at the optical axis, and has a reverse curve point at a location other than the optical axis. L6 has a negative focal power.

The seventh lens L7 includes two surfaces: a surface facing the object plane side and a surface facing the image plane side. The two surfaces may be aspheric surfaces. Specifically, the surface facing the object plane side is a convex surface at the optical axis X, the surface facing the image plane side is a concave surface at the optical axis X, and L7 has a negative focal power, which helps ensure a back focal length, correct astigmatism, and control an incidence angle of main light towards the image sensor. Specifically, in the surface facing the image plane side, there is a reverse curve point at a location far away from the optical axis X. In other words, the surface facing the image plane side is an aspheric surface that is a concave surface near the optical axis X and that is changed into a convex surface gradually at a periphery part of the surface. Therefore, as a focal power of L7 is gradually oriented to a peripheral part of the lens, a negative focal power of L7 is weaker, or the negative focal power of L7 is gradually changed into a positive focal power at the peripheral part. Forming such an aspheric surface helps control an incidence angle of main light towards the image sensor at each image height location. Specifically, the surface facing the object plane side also has an aspheric surface of which a focal power is changed into a positive focal power at a peripheral part. In this way, the peripheral part of lens L7 allocates a required positive focal power to the two surfaces, to prevent a sharp shape change of L7.

Based on the first aspect, in a possible implementation, the camera lens further includes an infrared filter IR. The IR is disposed between the lens module and the image plane (the image sensor), and is configured to cut off and filter an infrared ray, and the like. For example, in implementation (a) of the foregoing two implementations, the camera lens may further include six independent lenses and one infrared filter; and in implementation (b) of the foregoing two implementations, the camera lens may further include seven independent lenses and one infrared filter.

Based on the first aspect, in a possible implementation, the lenses in the two implementations (a) and (b) may further meet the following conditions:
(1) $50 < {V}_{d} 1 < 60 ,$ where V_{d}l represents an Abbe number of the first lens L1 to a d line of a sodium spectrum;
(2) $50 < {V}_{d} 3 < 60 ,$ where V_{d}3 represents an Abbe number of the third lens L3 to the d line of the sodium spectrum;
(3) $20 < {V}_{d} 4 < 30 ,$ where V_{d}4 represents an Abbe number of the fourth lens L4 to the d line of the sodium spectrum;
(4) $1 < f 1 / f 21 < 5 ,$ where f1 represents a focal length of the first lens L1, and f21 represents a focal length of the surface facing the object plane side and the diffractive surface that are of the diffractive optical element; and
(5) $f 21 / f 22 < 1 ,$ where f22 represents a focal length of the surface facing the image plane side and the diffractive surface that are of the diffractive optical element;
(6) $1 < f 1 / f 21 < 5 ,$ where f1 represents a focal length of the first lens L1, and f21 represents a focal length of surface 3 and a focal length of surface 4 (a focal length of lens A) in the second lens L2 (namely, the diffractive optical element); and
(7) $f 21 / f 22 < 1 ,$ where f21 represents the focal length of lens A in the second lens L2, and f22 represents a focal length of surface 4 and a focal length of surface 5 (a focal length of lens B) in the second lens L2 (namely, the diffractive optical element).

In this embodiment of the present disclosure, based on conditions (1) to (5), the Abbe numbers of the first lens L1 to the fourth lens L4 to the d line are separately specified within proper ranges, so that an on-axis chromatic aberration and a chromatic difference of magnification can be well corrected. In addition, a proper plastic material can be easily selected for each lens based on the ranges specified above, so that costs of the camera lens are reduced.

In this embodiment of the present disclosure, based on conditions (6) and (7), a focal length ratio between the first lens L1 and lens B in the second lens L2 is specified within a proper range, and a focal length ratio between lens A and lens B that are of the second lens L2 is specified within a proper range, so that various aberrations can be corrected while a total track length is shortened.

According to a second aspect, an embodiment of the present disclosure provides a camera module. The camera module includes the camera lens described in the first aspect and an image sensor. The camera lens is configured to form an optical signal of a photographed object and reflect the optical signal to the image sensor; and the image sensor is configured to convert the optical signal corresponding to the photographed object into an image signal and output the image signal, so as to implement a photographing or video recording function of the camera module.

According to a third aspect, an embodiment of the present disclosure provides a terminal. The terminal includes a display and the camera module described in the second aspect, and the display is configured to display an image photographed by the camera module. To be specific, the camera module may be applied to terminal products such as a smartphone, a notebook computer, a desktop computer, a tablet computer, a personal digital assistant (PDA), a wearable device, an augmented reality (AR) device, a virtual reality (VR) device, and a monitoring device. In addition, because the camera lens has a relatively short total track length (TTL) and an ultra-wide aperture (such as F1.6, F1.5, or F1.4), an amount of light admitted by the camera lens can be increased by using the wide aperture. Therefore, imaging definition and color accuracy in a night scene or an indoor scene are improved, an image stabilization requirement for photographing and video recording is reduced, and design requirements of image sensors of different sizes are met, thereby facilitating implementations of miniaturization and high performance of the terminal products.

It can be learned that, in the embodiments of the present disclosure, on one hand, positive dispersion of refractive elements (such as L1 and the lens module) can be canceled by using negative dispersion of the diffractive optical element, so that an imaging chromatic aberration is effectively reduced. On the other hand, by using the lens module, monochromatic aberrations such as astigmatism, a spherical aberration, and distortion can be further balanced. Therefore, by using such a structural framework, a camera lens can be designed to implement an ultra-wide aperture (for example, F1.44) for image sensors of different sizes (for example, large-size image sensors of 1/2.8 inches to 1/2.3 inches), to improve imaging quality. In addition, in the embodiments of the present disclosure, parameters such as an aspheric coefficient, a thickness, a lens material, and a refractive index of each lens of the camera lens can be optimized to meet a miniaturization requirement of the camera lens (for example, a TTL is 5.12 mm). In other words, the camera lens provided in the embodiments of the present disclosure can not only implement both miniaturization and high imaging quality, but also meet a requirement of a size increase of the image sensor. In addition, because the diffractive optical element in the camera lens may be made of a plastic material, and the first lens and the lens module may also be made of plastic materials, no low-dispersion glass material or another special inorganic material is required. Therefore, implementing the embodiments of the present disclosure further effectively reduces costs of the camera lens, meeting commercial application requirements.

### BRIEF DESCRIPTION OF DRAWINGS

FIG. 1 is a schematic diagram of a structural framework of a camera module according to an example of the present disclosure;
FIG. 2 is a schematic structural diagram of an diffractive optical element according to an example of the present disclosure;
FIG. 3 is a schematic structural diagram of a camera lens including six independent lenses and one IR, and a lens module according to an example of the present disclosure;
(a) to (d) in FIG. 4A and FIG. 4B are aberration line graphs of polychromatic light on a visible spectrum ranging from 470 nm to 650 nm according to an example of the present disclosure;
FIG. 5 is a schematic diagram of simulation results of field curvature and distortion according to an example of the present disclosure;
(a) to (d) in FIG. 6A and FIG. 6B are aberration line graphs of polychromatic light on a visible spectrum ranging from 470 nm to 650 nm according to an example of the present disclosure;
FIG. 7 is a schematic diagram of simulation results of field curvature and distortion according to an example of the present disclosure;
FIG. 8 is a schematic structural diagram of a camera lens including seven independent lenses and one IR, and a lens module according to an example of the present disclosure; and
FIG. 9 is a schematic diagram of simulation results of a longitudinal spherical aberration and distortion according to an example of the present disclosure.

### DETAILED DESCRIPTION

The following describes the examples of the present disclosure with reference to the accompanying drawings in the examples of the present disclosure.

Terms used in the implementation parts of the present disclosure are merely intended to explain specific examples of the present disclosure, but are not intended to limit the present disclosure. First, an aberration concept in the examples of the present disclosure is explained. An aberration (aberration) refers to inconsistency between a result obtained by non-paraxial ray tracing and a result obtained by paraxial ray tracing, that is, a deviation from an ideal condition of the Gaussian optics (first-order approximation theory or paraxial ray) in an optical system. The aberration is classified into two types: a chromatic aberration and a monochromatic aberration. A refractive index of a lens material is a function of a wavelength, and the chromatic aberration is an aberration generated because refractive indexes are different when light with different wavelengths passes through a lens. The chromatic aberration may be further classified into two types: a chromatism of position and a chromatic difference of magnification. The chromatic aberration is a dispersion phenomenon. In the dispersion phenomenon, a velocity of light or a refractive index changes with a wavelength of a light wave in a medium. Dispersion in which a refractive index of light decreases with an increase of the wavelength may be referred to as normal dispersion, while dispersion in which a refractive index of light increases with an increase of the wavelength may be referred to as negative dispersion (or referred to as negative abnormal dispersion). The monochromatic aberration refers to an aberration generated even with light of a single wavelength, and is further classified into two types by generated effects: a "causing imaging blur" type and a "causing imaging deformation" type. The former type includes a spherical aberration, astigmatism (astigmatism), and the like; and the latter type includes field curvature (field curvature, field curvature for short), distortion (distortion), and the like.

The following describes a camera module provided in the examples of the present disclosure. The camera module includes a camera lens and an image sensor. The camera lens may be installed between a photographed object (object plane) and the image sensor (image plane). The camera lens is configured to form an image of the photographed object (namely, an optical signal). The image sensor is configured to convert the image of the photographed object (namely, the optical signal) into an image signal and output the image signal, so as to implement a photographing or video recording function of the camera module. The camera module may be applied to terminal products such as a smartphone, a notebook computer, a desktop computer, a tablet computer, a personal digital assistant (PDA), a wearable device, an augmented reality (AR) device, a virtual reality (VR) device, and a monitoring device.

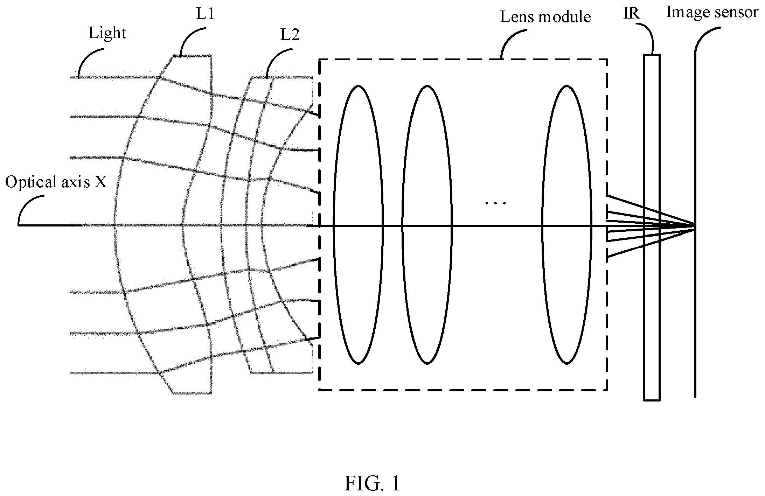

FIG. 1 is a schematic diagram of a structural framework of a camera module. As shown in FIG. 1, a camera lens is disposed between an image sensor and an object plane, to form an image of a photographed object and reflect the image to the image sensor. Therefore, a side on which the photographed object is located may be referred to as an object plane (or referred to as an object plane side), and a side on which the image sensor is located is referred to as an image plane (or referred to as an image plane side). Further, from the object plane side to the image plane side along an optical axis X, the camera lens includes: a first lens L1, a second lens L2, a lens module including several lenses, and an infrared filter (IR Filter).

The first lens L1 includes two surfaces opposite to each other, and the two surfaces may be respectively referred to as surface 1 and surface 2. Surface 1 faces the object plane side, and surface 2 faces the image plane side. Surface 1 and surface 2 both are aspheric surfaces, so as to balance monochromatic aberrations such as a spherical aberration and astigmatism. Specifically, L1 is in a meniscus shape, surface 1 is a convex surface at the optical axis X, surface 2 is a concave surface at the optical axis X, and L1 has a positive focal power.

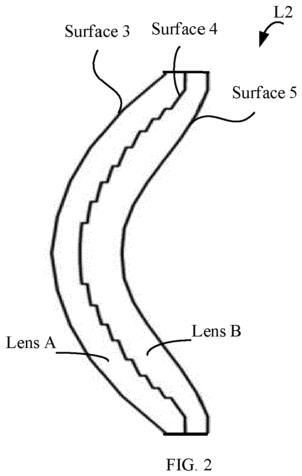

The second lens L2 is a diffractive optical element. FIG. 2 is a schematic structural diagram of L2. As shown in FIG. 2, the diffractive optical element includes two layers of different optical materials (two lenses) and an optical diffraction grating between the two layers of optical materials. Specifically, the diffractive optical element is formed by sandwiching the optical diffraction grating between the two lenses. L2 may be considered as including three surfaces that are respectively referred to as surface 3, surface 4, and surface 5. Surface 3 and surface 5 are outer surfaces of L2; and at least one of surface 3 and surface 5 is an aspheric surface, so as to balance monochromatic aberrations such as a spherical aberration and astigmatism. Surface 3 faces the object plane side and is a convex surface, and surface 5 faces the image plane side and is a concave surface. Surface 4 is formed by the diffraction grating inside L2, and may be a spherical surface or an aspheric surface.

In a specific example, a thickness of lens A in the diffractive optical element is H1, and H1 meets 0 mm < H1 < 0.5 mm; and a thickness of lens B is H2, and H2 meets 0 mm < H2 < 0.5 mm. The diffraction grating is disposed between lens A and lens B. A grating height Gh of the diffraction grating meets 0 µm < Gh < 50 µm; in other words, a thickness of the diffraction grating is between 0-50 µm. The diffractive optical element has a negative dispersion property.

In a specific example, the lens (which may be referred to as lens A for short) between surface 3 and surface 4 uses a low-dispersion sulfur resin material, and a range condition of a refractive index N1 of the material is 1.62 < N1 < 1.76. The lens (which may be referred to as lens B for short) between surface 4 and surface 5 uses a high-dispersion polycarbonate material or a modified alkane material, and a range condition of a refractive index N2 of the material is 1.55 < N2 < 1.64. An Abbe number V_{d}21 of the material used by lens A meets a range condition: 30 < V_{d}21 < 60; and an Abbe number V_{d}22 of the material used by lens B meets a range condition: 20 < V_{d}22 < 40. In a specific implementation, the Abbe number of lens A and the Abbe number of lens B that are of the diffractive optical element, an Abbe number of a lens in front of the diffractive optical element (namely, an Abbe number V_{d}1 of a material used by the first lens L1), and an Abbe number of a lens of the diffractive optical element (namely, an Abbe number V_{d}3 of a material used by a third lens L3 in the lens module) may further meet the following condition: V_{d}1 > V_{d}21 > V_{d}22 > V_{d}3, or V_{d}1 < V_{d}21 < V_{d}22 < V_{d}3.

In a specific example, L2 in general has a positive focal power, and the focal power of L2 may be further divided into a focal power P1 of lens A and a focal power P2 of lens B. P1 may be a positive focal power, or may be a negative focal power, so as to disperse a focal power of a first lens L1; and P2 may be a positive focal power or a negative focal power, so as to compensate for an aberration. For example, both P1 and P2 may be positive focal powers. For another example, when P1 is a positive focal power, P2 may be a negative focal power, and an absolute value of P2 is less than P1. For another example, when P1 is a negative focal power, P2 may be a positive focal power, and an absolute value of P2 is greater than P1. P1 and P2 meet the following relationship: -4 < P1/P2 < 4. The focal power P1 and the focal power P2 of the diffractive optical element, a focal power Pfront of the lens in front of the diffractive optical element (namely, the focal power of the first lens L1), and a focal power Plast of the lens behind the diffractive optical element (namely, the focal power of the third lens L3 in the lens module) may further meet the following conditions: Abs(P1/Pfront) < 4; and Abs(P2/Plast) < Abs(P1/Pfront), where Abs represents an absolute value function. Because two focal powers are used to disperse the focal power, a light refraction requirement of a single lens can be reduced, so that monochromatic aberrations such as a spherical aberration, astigmatism, and distortion that are caused by a single large focal power can be reduced, thereby implementing an ultra-wide aperture with a relatively short total track length.

A main optical axis (main optical axis) of the lens module, a main optical axis of the first lens, and a main optical axis of the second lens are mutually overlapped. The lens module includes N lenses arranged at intervals along the optical axis X, and main optical axes of the lenses are mutually overlapped. Each lens in the lens module has two surfaces, and a surface of each lens may be an aspheric surface. The lens module has a positive focal power to balance monochromatic aberrations such as a spherical aberration and astigmatism.

N is an integer greater than or equal to 3 and less than or equal to 7. To be specific, the camera lens may include five to nine independent lenses. In a specific example, N may be 4 or 5. To be specific, the camera lens may include six or seven independent lenses. For a detailed implementation of the camera lens, refer to the following descriptions.

The infrared filter IR is disposed between the lens module and the image sensor (image plane IM), and is configured to cut off and filter an infrared ray, and the like.

In addition, in this example of the present disclosure, an aperture value Fno of the camera lens is between 2.0 to 1.2.

It should be noted that, in a specific implementation, all lenses in the camera lens may be made of plastic materials. L1 may specifically use a low-dispersion cyclic olefin material. A lens in the lens module may use a conventional lens material (for example, a high-dispersion polycarbonate material or a low-dispersion cyclic olefin material) based on a structural design of the camera lens. For a specific material used by L2, refer to the foregoing descriptions. Details are not described herein again.

It should be further noted that the lens in this specification is an optical element that is close to an optical axis and that has a focal power. For a surface shape of the lens, the "convex surface" and the "concave surface" refer to a shape near an axis (near the optical axis).

It can be learned that the camera lens provided in this example of the present disclosure includes the first lens, the diffractive optical element, and the lens module. On one hand, positive dispersion of refractive elements (such as L1 and the lens module) is canceled by using negative dispersion of the diffractive optical element, so that an imaging chromatic aberration is effectively reduced. On the other hand, by using the lens module, monochromatic aberrations such as astigmatism, a spherical aberration, and distortion can be further balanced. Therefore, by using such a structural framework, a camera lens can be designed to implement a wide aperture (for example, an F1.5 wide aperture or an F1.4 wide aperture) for image sensors of different sizes (for example, large-size image sensors of 1/2.8 inches to 1/2.3 inches), to improve imaging quality. In addition, in this example of the present disclosure, parameters such as an aspheric coefficient, a thickness, a lens material, and a refractive index of each lens of the camera lens can be optimized to meet a miniaturization requirement of the camera lens (in other words, to implement a relatively short TTL). In other words, the camera lens provided in this example of the present disclosure can not only implement both miniaturization and high imaging quality, but also meet a requirement of a size increase of the image sensor.

In addition, because the diffractive optical element in the camera lens may be made of a plastic material, and the first lens and the lens module may also be made of plastic materials, no low-dispersion glass material or another special inorganic material is required. Therefore, implementing this example of the present disclosure further effectively reduces costs of the camera lens, meeting commercial application requirements.

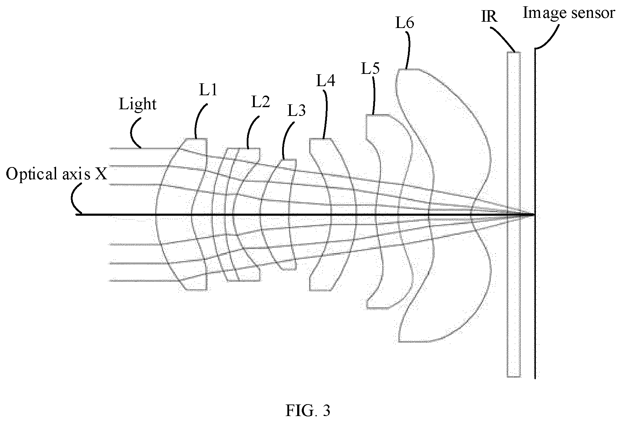

Based on the structural framework in the example in FIG. 1, the following describes in detail a specific implementation of the camera lens provided in the examples of the present disclosure. Referring to FIG. 3, in this implementation, a lens module includes four lenses. In other words, a camera lens includes six independent lenses and one infrared filter. From an object plane side to an image plane side along an optical axis X, the camera lens successively includes: a first lens L1, a second lens L2, a third lens L3, a fourth lens L4, a fifth lens L5, and a sixth lens L6.

For the first lens L1, refer to related descriptions of L1 in the example in FIG. 1. Details are not described herein again.

For the second lens L2, refer to related descriptions of L2 in the examples in FIG. 1 and FIG. 2. Details are not described herein again.

The third lens L3 includes two surfaces that may be respectively referred to as surface 6 and surface 7. Surface 6 faces the object plane side, and surface 7 faces the image plane side. At least one of surface 6 and surface 7 is an aspheric surface, so as to correct a residual aberration and reduce an astigmatism aberration. Specifically, surface 6 is a convex surface at the optical axis X, surface 7 may be a convex surface or a concave surface at the optical axis X, and L3 has a positive focal power.

The fourth lens L4 includes two surfaces that may be respectively referred to as surface 8 and surface 9. Surface 8 faces the object plane side, and surface 9 faces the image plane side. Specifically, L4 is in a meniscus shape, and surface 8 is a concave surface at the optical axis X. L4 may be used to correct an on-axis chromatic aberration (which is a chromatism of position), well correct a chromatic difference of magnification, and correct distortion in an image plane of a low image height to an approximately 70% image height. L4 has a relatively weak positive focal power or negative focal power.

The fifth lens L5 includes two surfaces that may be respectively referred to as surface 10 and surface 11. Surface 10 faces the object plane side, and surface 11 faces the image plane side. Surface 10 and surface 11 both are aspheric surfaces, so as to correct a spherical aberration of a peripheral part of the lens. Using L5 further helps control an angle of light emitted from L5 to an appropriate angle between a low image height and a maximum image height. Specifically, L5 is in a meniscus shape, surface 10 is a convex surface at the optical axis X, and surface 11 is a concave surface at the optical axis X. In addition, in surface 10 and/or surface 11, there is a reverse curve point at a location far away from the optical axis X. In other words, a peripheral part of surface 10 and/or surface 11 bends towards the object plane side.

The sixth lens L6 includes two surfaces that may be respectively referred to as surface 12 and surface 13. Surface 12 faces the object plane side, and surface 13 faces the image plane side. Surface 12 and surface 13 both are aspheric surfaces. Specifically, surface 12 is a convex surface at the optical axis X, surface 13 is a concave surface at the optical axis X, and L6 has a negative focal power, which helps ensure a back focal length, correct astigmatism, and control an incidence angle of main light towards an image sensor. Specifically, in surface 13, there is a reverse curve point at a location far away from the optical axis X. In other words, surface 13 is an aspheric surface that is a concave surface near the optical axis X and that is changed into a convex surface gradually at a periphery part of surface 13. Therefore, as a focal power of L6 is gradually oriented to a peripheral part of the lens, a negative focal power of L6 is weaker, or the negative focal power of L6 is gradually changed into a positive focal power at the peripheral part. Forming such an aspheric surface helps control an incidence angle of main light towards the image sensor at each image height location. Specifically, surface 12 also has an aspheric surface of which a focal power is changed into a positive focal power at a peripheral part. In this way, the peripheral part of lens L6 allocates a required positive focal power to the two surfaces, to prevent a sharp shape change of L6.

It may be understood that the third lens L3, the fourth lens L4, the fifth lens L5, and the sixth lens L6 jointly constitute the "lens module" in this example of the present disclosure.

The infrared filter IR is disposed between the lens module and the image sensor, and is configured to cut off and filter an infrared ray, and the like.

It should be noted that, in a specific implementation, all lenses in the camera lens may be made of plastic materials. L1 may specifically use a low-dispersion cyclic olefin material. L3, L4, L5, and L6 may use high-dispersion polycarbonate materials or low-dispersion cyclic olefin materials based on a structural design of the camera lens. For a specific material used by L2, refer to the foregoing descriptions. Details are not described herein again.

It should be further noted that the "reverse curve point" in this specification is a point on an aspheric surface whose tangent plane is vertical to an optical axis.

In a specific example of the present disclosure, the lenses in the camera lens described in the example in FIG. 3 meet the following conditions (1) to (7):
(1) 50 < V_{d}l < 60, where V_{d}l represents an Abbe number of the first lens L1 to a d line (namely, the d line in a sodium spectrum, and specifically, a reference wavelength of the d line is 589.3 nm);
(2) 30 < V_{d}21 < 60, where V_{d}21 represents an Abbe number of lens A in the second lens L2 to the d line;
(3) 20 < V_{d}22 < 40, where V_{d}22 represents an Abbe number of lens B in the second lens L2 to the d line;
(4) 50 < V_{d}3 < 60, where V_{d}3 represents an Abbe number of the third lens L3 to the d line;
(5) 20 < V_{d}4 < 30, where V_{d}4 represents an Abbe number of the fourth lens L4 to the d line;
(6) 1 < f1/f21 < 5, where f1 represents a focal length of the first lens L1, and f21 represents a focal length of surface 3 and a focal length of surface 4 (a focal length of lens A) in the second lens L2 (namely, the diffractive optical element); and
(7) f21/f22 < 1, where f21 represents the focal length of lens A in the second lens L2, and f22 represents a focal length of surface 4 and a focal length of surface 5 (a focal length of lens B) in the second lens L2 (namely, the diffractive optical element).

In this example of the present disclosure, based on conditions (1) to (5), the Abbe numbers of the first lens L1 to the fourth lens L4 to the d line are separately specified within proper ranges, so that an on-axis chromatic aberration and a chromatic difference of magnification can be well corrected. In addition, a proper plastic material can be easily selected for each lens based on the ranges specified above, so that costs of the camera lens are reduced.

In this example of the present disclosure, based on conditions (6) and (7), a focal length ratio between the first lens L1 and lens B in the second lens L2 is specified within a proper range, and a focal length ratio between lens A and lens B that are of the second lens L2 is specified within a proper range, so that various aberrations can be corrected while a total track length is shortened.

Based on the camera lens described in the example in FIG. 3 and conditions (1) to (7), the following further describes lens parameters related to the camera lens in a specific application scenario. As shown in Table 1, surfaces represented by surface sequence numbers have a one-to-one correspondence with the surfaces provided above. To be specific, a surface sequence number "1" represents surface 1, a surface sequence number "2" represents surface 2, a surface sequence number "3" represents surface 3, and so on. f represents a focal length of the entire camera lens; Fno represents an F value of the camera lens; ω represents a semi-angular field of view of the camera lens; and TTL represents a total track length of the camera lens. In this specification, the total track length (TTL) is a distance, on the optical axis X, between a surface that is of a lens closest to the object plane side and that faces the object plane side (for example, surface 1 of the first lens in this specification) and the image plane (IM) in an optical system. In addition, i represents a sequence number (to be specific, corresponding to each lens surface in the camera lens shown in the example in FIG. 3) of a lens surface counted from the object plane side; r represents a curvature radius of a lens surface; d represents a distance between lens surfaces on the optical axis X; N_{d} represents a refractive index of a lens surface to the d line; and V_{d} represents an Abbe number of a lens surface to the d line.

**Table 1**

| Value example 1 (unit: mm): | | | | |
|---|---|---|---|---|
| f=3.99; Fno=1.44; ω=37.2°; and TTL=5.12 | | | | |
| Surface data | | | | |
| Surface sequence number | Curvature radius r | Surface interval d | Refractive index N_{d} | Abbe number V_{d} |
| Object plane | Infinite | Infinite | | |
| 1 | 1.809 | 0.57 | 1.5445 | 55.987 |
| 2 | 2.300 | 0.160 | | |
| 3 | 1.889 | 0.172 | 1.6828 | 36.426 |
| 4 | 4.800 | 0.220 | 1.6397 | 23.529 |
| 5 | 1.845 | 0.122 | | |
| 6 | 2.931 | 0.490 | 1.5445 | 55.987 |
| 7 | 13.487 | 0.579 | | |
| 8 | -6.298 | 0.330 | 1.6509 | 21.523 |
| 9 | 6.460 | 0.05 | | |
| 10 | 2.331 | 0.450 | 1.6509 | 21.523 |
| 11 | 5.250 | 0.250 | | |
| 12 | 1.917 | 0.57 | 1.5445 | 55.987 |
| 13 | 1.550 | 0.655 | | |
| 14 | Infinite | 0.210 | 1.5168 | 64.167 |
| 15 | Infinite | 0.200 | | |
| Image plane | Infinite | | | |

The following further describes lens surfaces of each lens in the camera lens. In this example, a lens surface of the camera lens may be an aspheric surface, and for these aspheric lens surfaces, an aspheric surface equation for a surface of the aspheric surface may be given by: $Z = \frac{{cr}^{2}}{1 + \sqrt{1 - \left(1+K\right) {c}^{2} {r}^{2}}} + {A}_{4} {r}^{4} + {A}_{6} {r}^{6} + {A}_{8} {r}^{8} + {A}_{10} {r}^{10} + {A}_{12} {r}^{12}$

Z represents a height parallel to a z axis in the lens surface; r represents a radial distance starting from a vertex; c is curvature of a surface at the vertex; K is a constant of the cone; and A₄, A₆, A₈, A₁₀, and A₁₂ represent aspheric coefficients respectively corresponding to order 4, order 6, order 8, order 10, and order 12. An aspheric surface of a proper order may be selected as required.

The following further provides a constant of the cone K and an aspheric coefficient that correspond to each lens surface in the camera lens in the application scenario, as shown in Table 2:

**Table 2**

| | K | *A*₄ | *A*₆ | *A*₈ | *A*₁₀ | *A*₁₂ |
|---|---|---|---|---|---|---|
| Surface 1 | -0.0277 | 0.054704365 | 0.041299755 | -0.46250077 | -0.12658186 | 0.0067315 45 |
| Surface 2 | -1.511 | -0.075658409 | -0.087257886 | -0.092511543 | -0.016639727 | 0.0008327 780 |
| Surface 3 | -0.687 | 0.058488589 | 2.4934421 | 7.6980794 | 4.0503548 | 0.1922085 |
| | | | | | | 3 |
| Surface 4 | 0E+00 | 0E+00 | 0E+00 | 0E+00 | 0E+00 | 0E+00 |
| Surface 5 | 0.894 | 0.12942139 | 1.7097088 | 4.6533941 | 3.0374803 | 0.11913865 |
| Surface 6 | 3.689 | 0.087486381 | -0.53444668 | -4.7402138 | -2.7400963 | -0.124107 |
| Surface 7 | 0.722 | -0.15784226 | -1.5831155 | -3.8235721 | -2.0412824 | -0.0445895 |
| Surface 8 | 25.267 | 0.11459205 | 0.66922713 | -0.31130855 | -1.5006686 | -0.32449606 |
| Surface 9 | -14.139 | 0.38311759 | 0.67526473 | -1.1962971 | 0.32740191 | -0.0677683 42 |
| Surface 10 | 1.357 | 0.19445387 | -0.46368365 | -1.0788348 | -0.39986588 | -0.0221658 22 |
| Surface 11 | 3.205 | -0.69061971 | -1.7261166 | -0.032256126 | -0.10740546 | -00059015 76 |
| Surface 12 | -20915 | -0.27675612 | 0.12453169 | -0.075551121 | -0.0097417913 | -0.0001283 01 |
| Surface 13 | -6.747 | -0.37491321 | -0.046787921 | 0.03238507 | 0.0021038401 | 00002041 0033 |

Based on Table 1 and Table 2, the following describes an experiment test result of the camera lens in this example of the present disclosure.

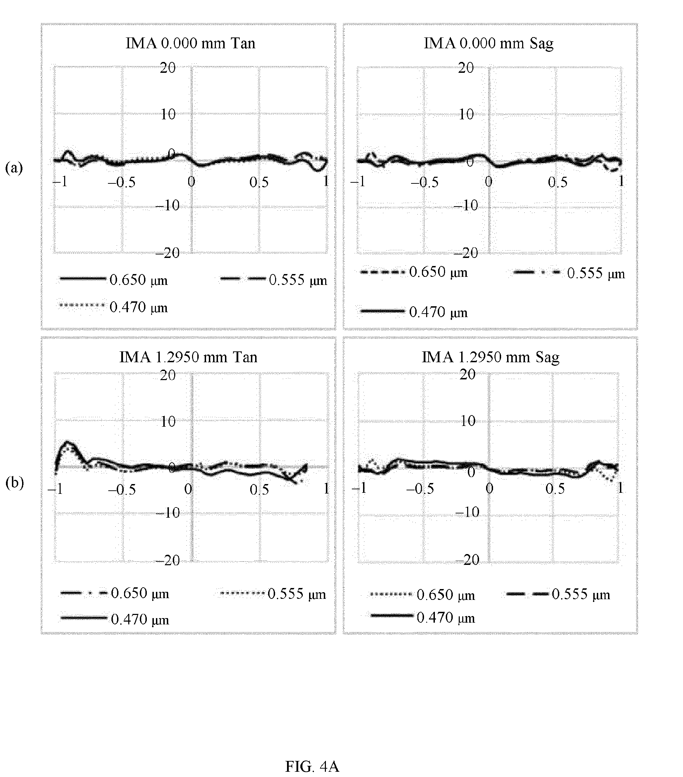

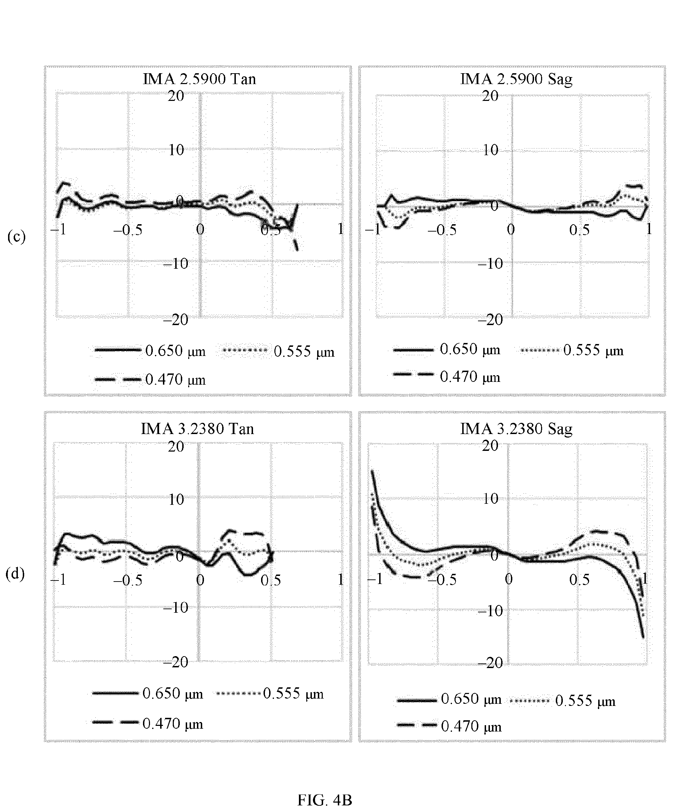

(a) to (d) in FIG. 4A and FIG. 4B are aberration line graphs of polychromatic light on a visible spectrum ranging from 470 nm to 650 nm according to an example of the present disclosure. As shown in FIG. 4A and FIG. 4B, aberrations (corresponding values on a vertical axis) that correspond to different imaging planes (a meridional image plane Tan, and a sagittal image plane Sag), that are at different fields of view (0 mm, 1.2950 mm, 2.590 mm, and 3.2380 mm), and that correspond to different wavelengths (0.650 µm, 0.550 µm, and 0.470 µm) are all less than 20 µm. In other words, aberrations of different imaging planes, different fields of view, and different wavelengths are well corrected.

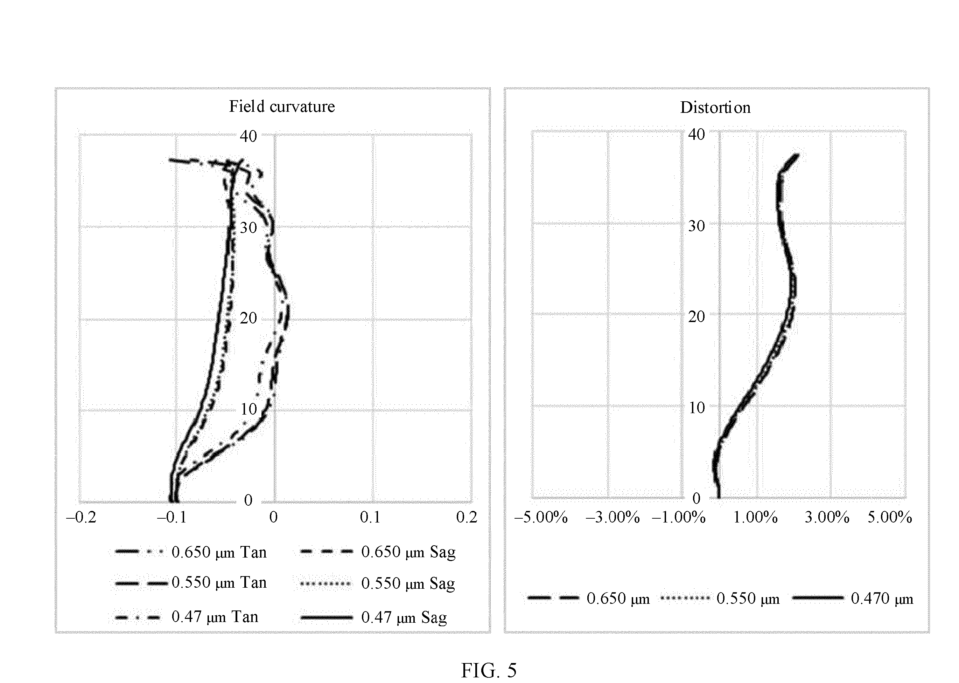

FIG. 5 shows simulation results of field curvature (Field Curvature) and distortion (Distortion) according to an example of the present disclosure. It can be learned from the simulation results shown in the figure that field curvature of different wavelengths (0.650 µm, 0.550 µm, and 0.470 µm) can be better compensated, and distortion of the different wavelengths (0.650 µm, 0.550 µm, and 0.470 µm) can also be controlled within 3%. Therefore, the camera lens provided in this example of the present disclosure meets a design and application requirement. To be specific, within a TTL range of 5.12 mm, the camera lens may implement an F1.44 ultra-wide aperture, and an aberration can be excellently optimized.

It can be learned that the camera lens provided in this example of the present disclosure includes six lenses, and the lens at location L2 is a diffractive optical element. On one hand, positive dispersion of refractive elements (such as L1 and the lens module) is canceled by using negative dispersion of the diffractive optical element, so that an imaging chromatic aberration is effectively reduced. On the other hand, by using the lens module, monochromatic aberrations such as astigmatism, a spherical aberration, and distortion can be further balanced. Therefore, by using such a structural framework, a camera lens can be designed to implement an ultra-wide aperture (for example, F1.44) for image sensors of different sizes (for example, large-size image sensors of 1/2.8 inches to 1/2.3 inches), to improve imaging quality. In addition, in this example of the present disclosure, parameters such as an aspheric coefficient, a thickness, a lens material, and a refractive index of each lens of the camera lens can be optimized to meet a miniaturization requirement of the camera lens (for example, a TTL is 5.12 mm). In other words, the camera lens provided in this example of the present disclosure can not only implement both miniaturization and high imaging quality, but also meet a requirement of a size increase of the image sensor.

In addition, because the diffractive optical element in the camera lens may be made of a plastic material, and the first lens and the lens module may also be made of plastic materials, no low-dispersion glass material or another special inorganic material is required. Therefore, implementing this example of the present disclosure further effectively reduces costs of the camera lens, meeting commercial application requirements.

Based on the camera lens described in the example in FIG. 3 and conditions (1) to (7), an example of the present disclosure provides lens parameters related to the camera lens in another specific application scenario. As shown in Table 3, similarly, surfaces corresponding to surface sequence numbers have a one-to-one correspondence with the surfaces provided above; f represents a focal length of the entire camera lens; Fno represents an F value of the camera lens; ω represents a semi-angular field of view of the camera lens; and TTL represents a total track length of the camera lens.

In addition, i represents a sequence number (to be specific, corresponding to each lens surface in the camera lens shown in the example in FIG. 2) of a lens surface counted from the object plane side; r represents a curvature radius of a lens surface; d represents a distance between lens surfaces on the optical axis X; N_{d} represents a refractive index of a lens surface to the d line; and V_{d} represents an Abbe number of a lens surface to the d line.

**Table 3**

| Value example 2 (unit: mm): | | | | |
|---|---|---|---|---|
| f=4.03; Fno=1.48; ω=37.2°; and TTL=5.14 | | | | |
| Surface data | | | | |
| Surface sequence number | Curvature radius r | Surface interval d | Refractive index N_{d} | Abbe number V_{d} |
| Object plane | Infinite | Infinite | | |
| 1 | 1.855 | 0.620 | 1.5445 | 55.987 |
| 2 | 2.358 | 0.160 | | |
| 3 | 1.889 | 0.172 | 1.6828 | 36.426 |
| 4 | 4.800 | 0.220 | 1.6397 | 23.529 |
| 5 | 1.845 | 0.15 | | |
| 6 | 3.102 | 0.480 | 1.5445 | 55.987 |
| 7 | 19.722 | 0.675 | | |
| 8 | -14.906 | 0.336 | 1.6509 | 21.523 |
| 9 | 4.652 | 0.065 | | |
| 10 | 3.338 | 0.430 | 1.6509 | 21.523 |
| 11 | 7.656 | 0.177 | | |
| 12 | 1.482 | 0.493 | 1.5445 | 55.987 |
| 13 | 1.265 | 0.655 | | |
| 14 | Infinite | 0.210 | 1.5168 | 64.167 |
| 15 | Infinite | 0.20 | | |
| Image plane | Infinite | | | |

The following further describes lens surfaces of each lens in the camera lens. Similarly, in this example, a lens surface of the camera lens may be an aspheric surface, and for these aspheric lens surfaces, an aspheric surface equation for a surface of the aspheric surface may be given by: $Z = \frac{{cr}^{2}}{1 + \sqrt{1 - \left(1+K\right) {c}^{2} {r}^{2}}} + {A}_{4} {r}^{4} + {A}_{6} {r}^{6} + {A}_{8} {r}^{8} + {A}_{10} {r}^{10} + {A}_{12} {r}^{12}$

Z represents a height parallel to a z axis in the lens surface; r represents a radial distance starting from a vertex; c is curvature of a surface at the vertex; K is a constant of the cone; and A₄, A₆, A₈, A₁₀, and A₁₂ represent aspheric coefficients respectively corresponding to order 4, order 6, order 8, order 10, and order 12. An aspheric surface of a proper order may be selected as required. The following further provides a constant of the cone K and an aspheric coefficient that correspond to each lens surface in the camera lens in the application scenario, as shown in Table 4:

**Table 4**

| | K | *A*₄ | *A*₆ | *A*₈ | *A*₁₀ | *A*₁₂ |
|---|---|---|---|---|---|---|
| Surface 1 | 0.001 | 0.054704365 | 0.041299755 | -0.46250077 | -0.12658186 | 0.0067315459 |
| Surface 2 | -1.511 | -0.075658409 | -0.087257886 | -0.092511543 | -0.016639727 | 0.00083277807 |
| Surface 3 | -0.687 | 0.058488589 | 2.4934421 | 7.6980794 | 4.0503548 | 0.19220583 |
| Surface 4 | 0E+00 | 0E+00 | 0E+00 | 0E+00 | 0E+00 | 0E+00 |
| Surface 5 | 0.894 | 0.12942139 | 1.7097088 | 4.6533941 | 3.0374803 | 0.11913865 |
| Surface 6 | 4.711 | 0.087486381 | -0.53444668 | -4.7402138 | -2.7400963 | -0.12410726 |
| Surface 7 | 87.587 | -0.15784226 | -1.5831155 | -3.8235721 | -2.0412824 | -0.044589563 |
| Surface 8 | -76.068 | 0.11459205 | 0.66922713 | -0.31130855 | -1.5006686 | -0.32449606 |
| Surface 9 | -432.233 | 0.38311759 | 0.67526473 | -1.1962971 | 0.32740191 | 0.067768342 |
| Surface 10 | 3.325 | 0.19445387 | -0.46368365 | -1.0788348 | -0.39986588 | -0.022165822 |
| Surface 11 | -31.186 | -0.69061971 | -1.7261166 | -0.032256126 | -0.10740546 | -0.0059015762 |
| Surface 12 | -22.338 | -0.27675612 | 0.12453169 | -0.075551121 | -0.0097417913 | -0.000128301 |
| Surface 13 | -3.155 | -0.37491321 | -0.046787921 | 003238507 | 0.0021038401 | 0.00020410033 |

Based on Table 3 and Table 4, the following provides an experiment test result of the camera lens in this example of the present disclosure.

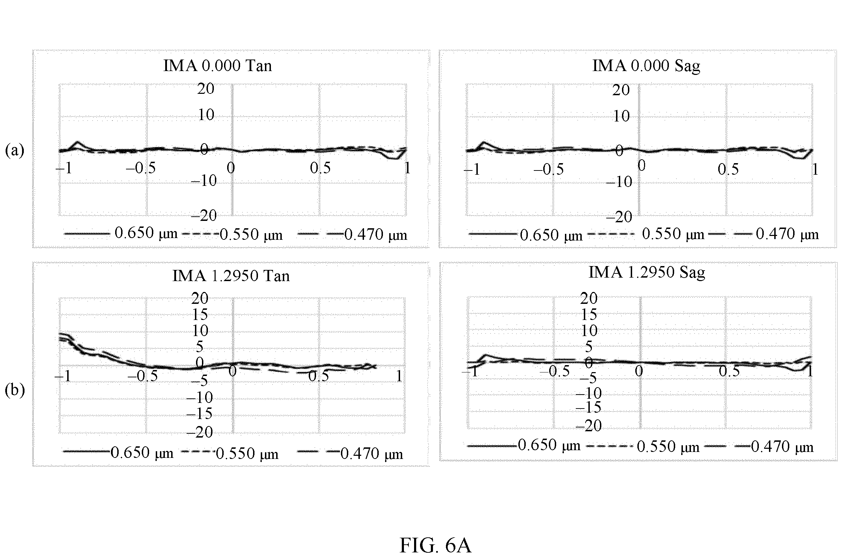

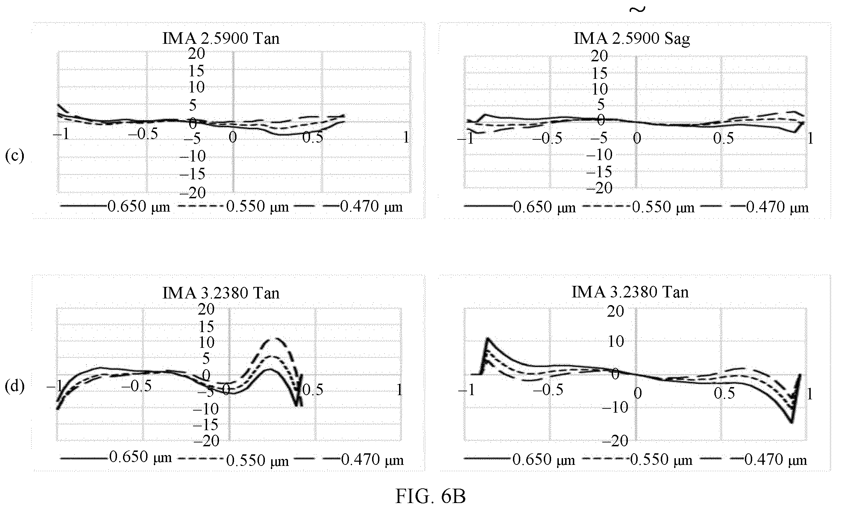

(a) to (d) in FIG. 6A and FIG. 6B are aberration line graphs of polychromatic light on a visible spectrum ranging from 470 nm to 650 nm according to an example of the present disclosure. As shown in FIG. 6A and FIG. 6B , aberrations (corresponding values on a vertical axis) that correspond to different imaging planes (a meridional image plane Tan, and a sagittal image plane Sag), that are at different fields of view (0 mm, 1.2950 mm, 2.590 mm, and 3.2380 mm), and that correspond to different wavelengths (0.650 µm, 0.550 µm, and 0.470 µm) are all less than 20 µm. In other words, aberrations of different imaging planes, different fields of view, and different wavelengths are well corrected.

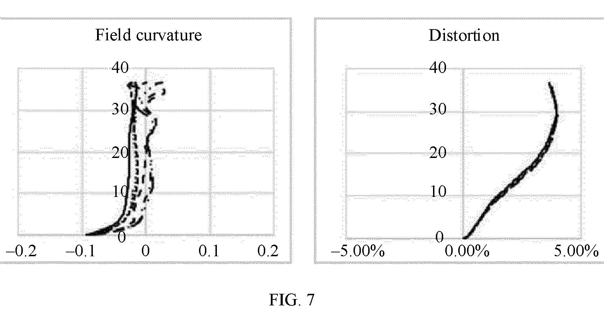

FIG. 7 shows simulation results of field curvature and distortion according to an example of the present disclosure. It can be learned from the simulation results shown in the figure that field curvature of different wavelengths (0.650 µm, 0.550 µm, and 0.470 µm) can be better compensated, and distortion of the different wavelengths (0.650 µm, 0.550 µm, and 0.470 µm) can also be controlled within 4%. Therefore, the camera lens provided in this example of the present disclosure meets a design and application requirement. To be specific, within a TTL range of 5.14 mm, the camera lens may implement an F1.48 ultra-wide aperture, and an optical aberration can be excellently optimized.

It can be learned that the camera lens provided in this example of the present disclosure includes six lenses, and the lens at location L2 is a diffractive optical element. On one hand, positive dispersion of refractive elements (such as L1 and the lens module) is canceled by using negative dispersion of the diffractive optical element, so that an imaging chromatic aberration is effectively reduced. On the other hand, by using the lens module, monochromatic aberrations such as astigmatism, a spherical aberration, and distortion can be further balanced. Therefore, by using such a structural framework, a camera lens can be designed to implement an ultra-wide aperture (for example, F1.48) for image sensors of different sizes (for example, large-size image sensors of 1/2.8 inches to 1/2.3 inches), to improve imaging quality. In addition, in this example of the present disclosure, parameters such as an aspheric coefficient, a thickness, a lens material, and a refractive index of each lens of the camera lens can be optimized to meet a miniaturization requirement of the camera lens (for example, a TTL is 5.14 mm). In other words, the camera lens provided in this example of the present disclosure can not only implement both miniaturization and high imaging quality, but also meet a requirement of a size increase of the image sensor.

In addition, because the diffractive optical element in the camera lens may be made of a plastic material, and the first lens and the lens module may also be made of plastic materials, no low-dispersion glass material or another special inorganic material is required. Therefore, implementing this example of the present disclosure further effectively reduces costs of the camera lens, meeting commercial application requirements.

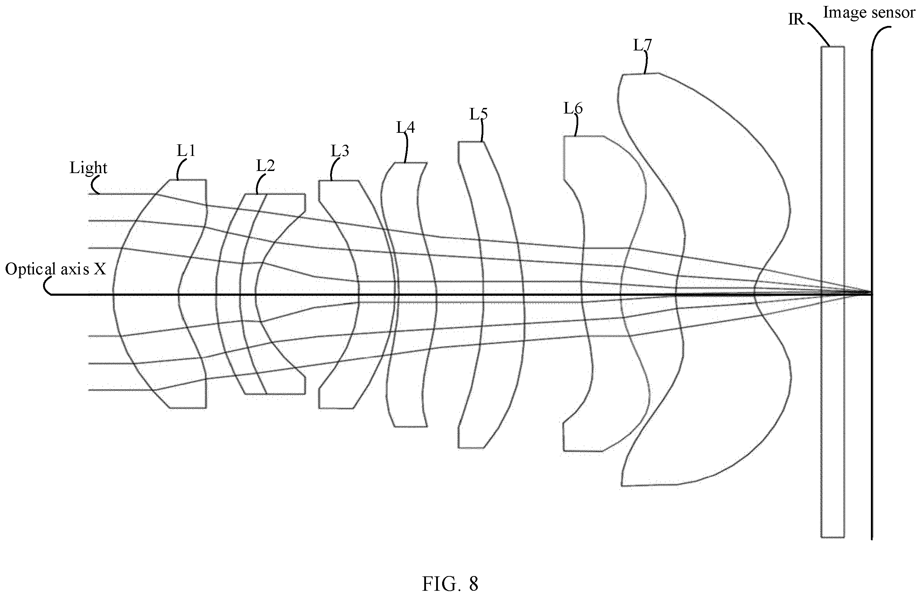

Based on the structural framework in the example in FIG. 1, the following continue to describe in detail another specific implementation of the camera lens provided in the examples of the present disclosure. Referring to FIG. 8, in this implementation, a lens module includes five lenses. In other words, a camera lens includes seven independent lenses and one infrared filter. From an object plane side to an image plane side along an optical axis X, the camera lens successively includes: a first lens L1, a second lens L2, a third lens L3, a fourth lens L4, a fifth lens L5, a sixth lens L6, and a seventh lens L7.

For the first lens L1, refer to related descriptions of L1 in the example in FIG. 1. Details are not described herein again.

For the second lens L2, refer to related descriptions of L2 in the examples in FIG. 1 and FIG. 2. Details are not described herein again.

The third lens L3 includes two surfaces that may be respectively referred to as surface 6 and surface 7. Surface 6 faces the object plane side, and surface 7 faces the image plane side. At least one of surface 6 and surface 7 is an aspheric surface, so as to correct a residual aberration and reduce an astigmatism aberration. Specifically, surface 6 is a concave surface at the optical axis X, surface 7 may be a convex surface or a concave surface at the optical axis X, and L3 has a negative focal power.

The fourth lens L4 includes two surfaces that may be respectively referred to as surface 8 and surface 9. Surface 8 faces the object plane side, and surface 9 faces the image plane side. Specifically, L4 is in a meniscus shape, surface 8 is a concave surface at the optical axis X, and L4 may be used to correct an on-axis chromatic aberration (or referred to as a longitudinal chromatic aberration) and well correct a chromatic difference of magnification. L4 has a relatively weak positive focal power or negative focal power.

The fifth lens L5 includes two surfaces that may be respectively referred to as surface 10 and surface 11. Surface 10 faces the object plane side, and is a concave surface at the optical axis X; and surface 11 faces the image plane side. Surface 10 and surface 11 both are aspheric surfaces, so as to correct a spherical aberration of a peripheral part of the lens.

The sixth lens L6 includes two surfaces that may be respectively referred to as surface 12 and surface 13. Surface 12 faces the object plane side, and surface 13 faces the image plane side. Surface 12 and surface 13 both are aspheric surfaces. Specifically, surface 12 is a convex surface at the optical axis X, and has a reverse curve point at a location other than the optical axis; and surface 13 is a concave surface at the optical axis X, and has a reverse curve point at a location other than the optical axis. L6 has a negative focal power.

The seventh lens L7 includes two surfaces that may be respectively referred to as surface 14 and surface 15. Surface 14 faces the object plane side, and surface 15 faces the image plane side. Surface 14 and surface 15 both are aspheric surfaces. Specifically, surface 14 is a convex surface at the optical axis X, surface 15 is a concave surface at the optical axis X, and L7 has a negative focal power, which helps ensure a back focal length, correct astigmatism, and control an incidence angle of main light towards an image sensor. Specifically, in surface 15, there is a reverse curve point at a location far away from the optical axis X. In other words, surface 15 is an aspheric surface that is a concave surface near the optical axis X and that is changed into a convex surface gradually at a periphery part of surface 15. Therefore, as a focal power of L7 is gradually oriented to a peripheral part of the lens, a negative focal power of L7 is weaker, or the negative focal power of L7 is gradually changed into a positive focal power at the peripheral part. Forming such an aspheric surface helps control an incidence angle of main light towards the image sensor at each image height location. Specifically, surface 14 also has an aspheric surface of which a focal power is changed into a positive focal power at a peripheral part. In this way, the peripheral part of lens L7 allocates a required positive focal power to the two surfaces, to prevent a sharp shape change of L7.

The infrared filter IR is disposed between the lens module and the image sensor (image plane IM), and is configured to cut off and filter an infrared ray, and the like.

It should be noted that, in a specific implementation of this example of the present disclosure, all lenses in the camera lens may be made of plastic materials. L1 may specifically use a low-dispersion cyclic olefin material, and L3, L4, L5, L6, and L7 may use high-dispersion polycarbonate materials or low-dispersion cyclic olefin materials based on a structural design of the camera lens. For a specific material used by L2, refer to the foregoing descriptions. A refractive index and an Abbe number of the material used by L2 are different from the related refractive index and Abbe number of L2 in the example in FIG. 3 (refer to Table 1, Table 3, and Table 5). Details are not described herein again.

Similarly, in a specific example of the present disclosure, the lenses in the camera lens described in the example in FIG. 8 meet the following conditions (1) to (7):
(1) 50 < V_{d}l < 60, where V_{d}l represents an Abbe number of the first lens L1 to a d line (namely, the d line in a sodium spectrum, and specifically, a reference wavelength of the d line is 589.3 nm);
(2) 30 < V_{d}21 < 60, where V_{d}21 represents an Abbe number of lens A in the second lens L2 to the d line;
(3) 20 < V_{d}22 < 40, where V_{d}22 represents an Abbe number of lens B in the second lens L2 to the d line;
(4) 50 < V_{d}3 < 60, where V_{d}3 represents an Abbe number of the third lens L3 to the d line;
(5) 20 < V_{d}4 < 30, where V_{d}4 represents an Abbe number of the fourth lens L4 to the d line;
(6) 1 < f1/f21 < 5, where f1 represents a focal length of the first lens L1, and f21 represents a focal length of surface 3 and a focal length of surface 4 (a focal length of lens A) in the second lens L2; and
(7) f21/f22 < 1, where f21 represents the focal length of lens A in the second lens L2, and f22 represents a focal length of surface 4 and a focal length of surface 5 (a focal length of lens B) in the second lens L2.

In this example of the present disclosure, based on conditions (1) to (5), the Abbe numbers of the first lens L1 to the fourth lens L4 to the d line are separately specified within proper ranges, so that an on-axis chromatic aberration and a chromatic difference of magnification can be well corrected. In addition, a proper plastic material can be easily selected for each lens based on the ranges specified above, so that costs of the camera lens are reduced.

In this example of the present disclosure, based on conditions (6) and (7), a focal length ratio between the first lens L1 and lens B in the second lens L2 is specified within a proper range, and a focal length ratio between lens A and lens B that are of the second lens L2 is specified within a proper range, so that various aberrations can be corrected while a total track length is shortened.

Based on the camera lens described in the example in FIG. 8 and conditions (1) to (7), the following further describes lens parameters related to the camera lens in a specific application scenario, as shown in Table 5:

**Table 5**

| Value example 3 (unit: mm): | | | | |
|---|---|---|---|---|
| f=4.76; Fno=1.45; ω=39°; and TTL=5.60 mm | | | | |
| Surface data | | | | |
| Surface sequence number | Curvature radius r | Surface interval d | Refractive index N_{d} | Abbe number V_{d} |
| Object plane | Infinite | Infinite | | |
| 1 | 1.889 | 0.890 | 1.5445 | 55.987 |
| 2 | 2.546 | 0.060 | | |
| 3 | 2.225 | 0.170 | 1.6845 | 36.30 |
| 4 | 4.100 | 0.160 | 1.6235 | 24.72 |
| 5 | 2.793 | 0.590 | | |
| 6 | -40.084 | 0.310 | 1.6509 | 21.523 |
| 7 | 291.705 | 0.020 | | |
| 8 | 55.743 | 0.380 | 1.5445 | 55.987 |
| 9 | -10.738 | 0.310 | | |
| 10 | -5.449 | 0.310 | 1.661 | 20.4 |
| 11 | -4.764 | 0.160 | | |
| 12 | 3.367 | 0.350 | 1.6509 | 21.523 |
| 13 | 3.126 | 0.360 | | |
| 14 | 5.882 | 0.650 | 1.5445 | 55.987 |
| 15 | 2.103 | 0.470 | | |
| 16 | Infinite | 0.210 | 1.5168 | 64.167 |
| 17 | Infinite | 0.200 | | |
| Image plane | Infinite | | | |

The following further describes lens surfaces of each lens in the camera lens. Similarly, in this example, a lens surface of the camera lens may be an aspheric surface, and for these aspheric lens surfaces, an aspheric surface equation for a surface of the aspheric surface may be given by: $Z = \frac{{cr}^{2}}{1 + \sqrt{1 - \left(1+K\right) {c}^{2} {r}^{2}}} + {A}_{4} {r}^{4} + {A}_{6} {r}^{6} + {A}_{8} {r}^{8} + {A}_{10} {r}^{10} + {A}_{12} {r}^{12} + {A}_{14} {r}^{14} + {A}_{16} {r}^{16}$

Z represents a height parallel to a z axis in the lens surface; r represents a radial distance starting from a vertex; c is curvature of a surface at the vertex; K is a constant of the cone; and A₄, A₆, A₈, A₁₀, A₁₂, A₁₄, and A₁₆ represent aspheric coefficients.

The following further provides a constant of the cone K and an aspheric coefficient that correspond to each lens surface in the camera lens in the application scenario, as shown in Table 6:

**Table 6**

| | K | *A*₄ | *A*₆ | *A*₈ | *A*₁₀ | *A*₁₂ | *A*₁₄ | *A*₁₆ |
|---|---|---|---|---|---|---|---|---|
| Surface 1 | -4.1720 E-01 | 3.4530E -03 | 1.0781E-02 | -1.3960E-02 | 1.3871E-02 | -7.8521E-03 | 2.4286E-03 | -3.2536E -04 |
| Surface 2 | -1.3043 E+01 | 4.7099E -02 | -1.1949E-01 | 9.9624E-02 | -4.1373E-02 | 7.8679E-03 | -2.1582E-04 | -9.9073E -05 |
| Surface 3 | 8.4415 E-01 | -4.3213E -02 | -3.1945E-02 | -2.2742E-02 | 6.6531E-02 | -4.6596E-02 | 1.4386E-02 | -1.6660E -03 |
| Surface 4 | 0E+00 | 0E+00 | 0E+00 | 0E+00 | 0E+00 | 0E+00 | 0E+00 | 0E+00 |
| Surface 5 | 3.8781 E+00 | 8.1416E -03 | -1.2035E-02 | -3.1199E-02 | 4.5387E-02 | -1.5681E-02 | -3.6917E-03 | 2.5410E -03 |
| Surface 6 | -4.9865 E+01 | -1.8406E -02 | -4.7337E-02 | 6.2801E-02 | -7.7102E-02 | 5.2545E-02 | -2.0555E-02 | 3.7803E -03 |
| Surface 7 | 9.9266 E+00 | -7.6149E -02 | 1.1240E-01 | -2.8116E-01 | 3.0913E-01 | -1.8070E-01 | 5.7103E-02 | -7.8710E -03 |
| Surface 8 | -1.1098 E+01 | -9.4413E -02 | 1.6410E-01 | -3.1486E-01 | 3.0694E-01 | -1.4767E-01 | 3.5367E-02 | -3.4171E -03 |
| Surface 9 | -4.9940 E+01 | -8.5423E -02 | 6.5964E-02 | -7.0159E-02 | 5.6891E-02 | -2.8421E-02 | 8.5085E-03 | -1.0854E -03 |
| Surface 10 | 1.0000 E+01 | -9.7083E -02 | 8.0246E-02 | -5.3697E-02 | 3.8141E-02 | -1.6544E-02 | 3.7355E-03 | -3.6741E -04 |
| Surface 11 | -4.6145 E+01 | -2.1651E -01 | 2.1073E-01 | -1.4352E-01 | 7.3057E-02 | -2.2741E-02 | 3.7130E-03 | -2.4516E -04 |
| Surface 12 | -2.7062 E+00 | -1.6879E -01 | 1.0912E-01 | -6.1114E-02 | 2.0481E-02 | -5.1413E-03 | 9.6095E-04 | -8.3904E -05 |
| Surface 13 | -5.9653 E-01 | -1.2703E -01 | 4.9522E-02 | -1.7672E-02 | 2.6329E-03 | 1.0414E-04 | -6.7234E-05 | 4.6496E -06 |
| Surface 14 | -4.9900 E+01 | -1.9785E -01 | 8.6009E-02 | -1.9534E-02 | 2.6621E-03 | -2.1743E-04 | 9.8882E-06 | -1.9567E -07 |
| Surface 15 | -1.1847 E+01 | -8.2472E -02 | 2.5934E-02 | -6.6823E-03 | 1.3789E-03 | -1.9136E-04 | 1.4377E-05 | -43020E -07 |

Based on Table 5 and Table 6, the following provides an experiment test result of the camera lens in this example of the present disclosure.

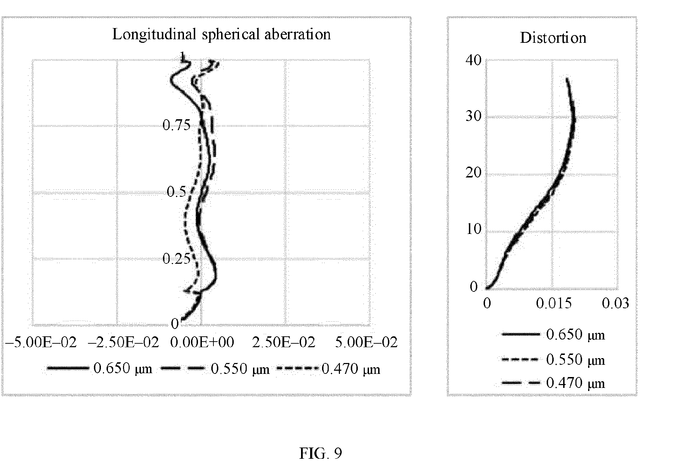

FIG. 9 shows simulation results of a longitudinal spherical aberration (Longitudinal spherical ABER) and distortion according to an example of the present disclosure. It can be learned from the simulation results shown in the figure that longitudinal spherical aberrations of different wavelengths (0.650 µm, 0.550 µm, and 0.470 µm) can be better compensated, and distortion of the different wavelengths (0.650 µm, 0.550 µm, and 0.470 µm) can also be controlled within 2%. Therefore, the camera lens provided in this example of the present disclosure meets a design and application requirement. To be specific, within a TTL range of 5.60 mm, the camera lens may implement an F1.45 ultra-wide aperture, and an optical aberration can be excellently optimized and corrected.

It can be learned that the camera lens provided in this example of the present disclosure includes seven lenses, and the lens at location L2 is a diffractive optical element. On one hand, positive dispersion of refractive elements (such as L1 and the lens module) is canceled by using negative dispersion of the diffractive optical element, so that an imaging chromatic aberration is effectively reduced. On the other hand, by using the lens module, monochromatic aberrations such as astigmatism, a spherical aberration, and distortion can be further balanced. Therefore, by using such a structural framework, a camera lens can be designed to implement an ultra-wide aperture (for example, F1.45) for image sensors of different sizes (for example, large-size image sensors of 1/2.8 inches to 1/2.3 inches), to improve imaging quality. In addition, in this example of the present disclosure, parameters such as an aspheric coefficient, a thickness, a lens material, and a refractive index of each lens of the camera lens can be optimized to meet a miniaturization requirement of the camera lens (for example, a TTL is 5.60 mm). In other words, the camera lens provided in this example of the present disclosure can not only implement both miniaturization and high imaging quality, but also meet a requirement of a size increase of the image sensor.

In addition, because the diffractive optical element in the camera lens may be made of a plastic material, and the first lens and the lens module may also be made of plastic materials, no low-dispersion glass material or another special inorganic material is required. Therefore, implementing this example of the present disclosure further effectively reduces costs of the camera lens, meeting commercial application requirements.

It should be noted that, although in the foregoing examples, the diffractive optical element is described as being at location L2 of the camera lens, in a possible implementation, the diffractive optical element may alternatively be at another location (for example, L3, L4, or L5). For an implementation process thereof, refer to the foregoing descriptions. Details are not described herein again.

It should be further noted that, although in the foregoing examples, only one diffractive optical element is described, in a possible implementation, there may be a plurality of diffractive optical elements (for example, two diffractive optical elements, three diffractive optical elements, or four diffractive optical elements). For an implementation process thereof, refer to the foregoing descriptions. Details are not described herein again.

Based on a same inventive concept, an example of the present disclosure further provides a lens module. The lens module includes the camera lens described above and an image sensor. The camera lens is configured to form an optical signal of a photographed object, and reflect the optical signal to the image sensor; and the image sensor is configured to convert the optical signal corresponding to the photographed object into an image signal.

Based on a same inventive concept, an example of the present disclosure further provides a terminal. The described lens module is installed in the terminal.

In the foregoing examples, the descriptions of each example have respective focuses. For a part that is not described in detail in an example, refer to related descriptions in other examples.

As described above, the camera lens in the implementations is applied to terminal products such as a smartphone, a notebook computer, a desktop computer, a tablet computer, a personal digital assistant (PDA), a wearable device, an augmented reality (AR) device, a virtual reality (VR) device, and a monitoring device, so that a requirement of an increasing size of an image sensor can be met. In addition, because the camera lens has a relatively short total track length (TTL) and an ultra-wide aperture (such as F1.6, F1.5, or F1.4), an amount of light admitted by the camera lens can be increased by using the wide aperture. Therefore, imaging definition and color accuracy in a night scene or an indoor scene are improved, an image stabilization requirement for photographing and video recording is reduced, and design requirements of image sensors of different sizes are met, thereby facilitating implementations of miniaturization and high performance of the terminal products.

## Claims

1. A camera lens, wherein from an object plane to an image plane along an optical axis (X), the camera lens comprises: a first lens (L1), a second lens (L2), and a lens module, the second lens (L2) is a diffractive optical element, and the diffractive optical element is between the first lens (L1) and the lens module, and is isolated from the first lens (L1) and the lens module;
a surface that is of the first lens (L1) and that faces the object plane side is a convex surface at the optical axis (X), a surface that is of the first lens (L1) and that faces the image plane side is a concave surface at the optical axis (X), and the first lens (L1) has a positive focal power;
the diffractive optical element comprises a surface facing the object plane side, a surface facing the image plane side, and a diffractive surface between the two surfaces, wherein the surface facing the object plane side is a convex surface at the optical axis (X), the surface facing the image plane side is a concave surface at the optical axis (X), the diffractive surface is concave to the image side plane, and the diffractive optical element has a positive focal power and a negative abnormal dispersion property;
the lens module comprises N lenses arranged at intervals along the optical axis (X), wherein N is an integer greater than or equal to 3 and less than or equal to 7, at least one of a surface facing the object plane side and a surface facing the image plane side that are of each of the N lenses is an aspheric surface, and the lens module has a positive focal power; and
optical axes of the first lens (L1), the diffractive optical element, and the N lenses in the lens module are mutually overlapped,
wherein in the diffractive optical element, a refractive index of a material between the surface facing the object plane side and the diffractive surface is N1, a refractive index of a material between the surface facing the image plane side and the diffractive surface is N2, and N1 and N2 meet the following conditions respectively: $1.62 < N 1 < 1.76 ;$ and $1.55 < N 2 < 1.64 ,$
wherein in the diffractive optical element, an Abbe number of the material between the surface facing the object plane side and the diffractive surface to a d line of a sodium spectrum is V_{d}21, an Abbe number of the material between the surface facing the image plane side and the diffractive surface to the d line of the sodium spectrum is V_{d}22, and Va21 and V_{d}22 meet the following conditions respectively: $30 < {V}_{d} 21 < 60 ;$ and $20 < {V}_{d} 22 < 40 ,$ and
wherein in the diffractive optical element, a focal power of the material between the surface facing the object plane side and the diffractive surface is P1, a focal power of the material between the surface facing the image plane side and the diffractive surface is P2, and P1 and P2 meet the following condition: $- 4 < P 1 / P 2 < 4 .$

2. The camera lens according to claim 1, wherein an aperture value of the camera lens is between 2.0 to 1.2.

3. The camera lens according to any one of claims 1 to 2, wherein at least one of the surface facing the object plane side and the surface facing the image plane side that are of the diffractive optical element is an aspheric surface.

4. The camera lens according to any one of claims 1 to 3, wherein the lens module comprises the following four lenses: a third lens (L3), a fourth lens (L4), a fifth lens (L5), and a sixth lens (L6), wherein
a surface that is of the third lens (L3) and that faces the object plane side is a convex surface at the optical axis (X), and the third lens (L3) has a positive focal power;
the fourth lens (L4) is in a meniscus shape, and a surface that is of the fourth lens (L4) and that faces the object plane side is a concave surface at the optical axis (X);
a surface that is of the fifth lens (L5) and that faces the object plane side is a convex surface at the optical axis (X), and the surface facing the object plane side has a reverse curve point at a location other than the optical axis (X); and
a surface that is of the sixth lens (L6) and that faces the object plane side is a convex surface at the optical axis (X), a surface that is of the sixth lens (L6) and that faces the image plane side is a concave surface at the optical axis (X), the surface facing the image plane side has a reverse curve point at a location other than the optical axis (X), and the sixth lens (L6) has a negative focal power.

5. The camera lens according to any one of claims 1 to 3, wherein the lens module comprises the following five lenses: a third lens (L3), a fourth lens (L4), a fifth lens (L5), a sixth lens (L6), and a seventh lens (L7), wherein
a surface that is of the third lens (L3) and that faces the object plane side is a concave surface at the optical axis (X), and the third lens (L3) has a negative focal power;
the fourth lens (L4) is in a meniscus shape, and a surface that is of the fourth lens (L4) and that faces the object plane side is a concave surface at the optical axis (X);
a surface that is of the fifth lens (L5) and that faces the object plane side is a concave surface at the optical axis (X);
a surface that is of the sixth lens (L6) and that faces the object plane side is a convex surface at the optical axis (X), the surface facing the object plane side has a reverse curve point at a location other than the optical axis (X), a surface that is of the sixth lens (L6) and that faces the image plane side is a concave surface at the optical axis (X), the surface facing the image plane side has a reverse curve point at a location other than the optical axis (X), and the sixth lens (L6) has a negative focal power; and
a surface that is of the seventh lens (L7) and that faces the object plane side is a convex surface at the optical axis (X), a surface that is of the seventh lens (L7) and that faces the image plane side is a concave surface at the optical axis (X), the surface facing the image plane side has a reverse curve point at a location other than the optical axis (X), and the seventh lens (L7) has a negative focal power.

6. The camera lens according to claim 4 or 5, wherein each lens in the camera lens further meets the following conditions: $50 < {V}_{d} 1 < 60 ,$ wherein V_{d}1 represents an Abbe number of the first lens (L1) to the d line of the sodium spectrum; $50 < {V}_{d} 3 < 60 ,$ wherein V_{d}3 represents an Abbe number of the third lens (L3) to the d line of the sodium spectrum; $20 < {V}_{d} 4 < 30 ,$ wherein V_{d}4 represents an Abbe number of the fourth lens (L4) to the d line of the sodium spectrum; $1 < f 1 / f 21 < 5 ,$ wherein f1 represents a focal length of the first lens (L1) , and f21 represents a focal length of the surface facing the object plane side and the diffractive surface that are of the diffractive optical element; and $f 21 / f 22 < 1 ,$ wherein f22 represents a focal length of the surface facing the image plane side and the diffractive surface that are of the diffractive optical element.

7. A camera module, wherein the camera module comprises the camera lens according to any one of claims 1 to 6 and an image sensor, wherein
the camera lens is configured to form an optical signal of a photographed object, and reflect the optical signal to the image sensor; and
the image sensor is configured to convert the optical signal corresponding to the photographed object into an image signal.

8. A terminal, wherein the terminal comprises a display and the camera module according to claim 7, and the display is configured to display an image photographed by the camera module.

## Patentansprüche

1. Kameraobjektiv, wobei das Kameraobjektiv von einer Objektebene zu einer Bildebene entlang einer optischen Achse (X) Folgendes umfasst: eine erste Linse (L1), eine zweite Linse (L2) und ein Linsenmodul, wobei die zweite Linse (L2) ein diffraktives optisches Element ist und sich das diffraktive optische Element zwischen der ersten Linse (L1) und dem Linsenmodul befindet und von der ersten Linse (L1) und dem Linsenmodul getrennt ist;
eine Oberfläche der ersten Linse (L1), die der Objektebenenseite zugewandt ist, ist an der optischen Achse (X) konvex, eine Oberfläche der ersten Linse (L1), die der Bildebenenseite zugewandt ist, ist an der optischen Achse (X) konkav und die erste Linse (L1) weist eine positive Brechkraft auf;
das diffraktive optische Element umfasst eine der Objektebenenseite zugewandte Oberfläche, eine der Bildebenenseite zugewandte Oberfläche und eine diffraktive Oberfläche zwischen den beiden Oberflächen, wobei die der Objektebenenseite zugewandte Oberfläche an der optischen Achse (X) konvex ist, die der Bildebenenseite zugewandte Oberfläche an der optischen Achse (X) konkav ist, die diffraktive Oberfläche zur Bildebenenseite hin konkav ist und das diffraktive optische Element eine positive Brechkraft und eine negative anomale Dispersionseigenschaft aufweist;
das Linsenmodul umfasst N Linsen, die in Abständen entlang der optischen Achse (X) angeordnet sind, wobei N eine ganze Zahl größer als oder gleich 3 und kleiner als oder gleich 7 ist, wobei bei jeder der N Linsen mindestens eine der beiden der Objektebenenseite bzw. der Bildebenenseite zugewandten Oberflächen eine asphärische Oberfläche ist und das Linsenmodul eine positive Brechkraft aufweist; und
optische Achsen der ersten Linse (L1), des diffraktiven optischen Elements und der N Linsen in dem Linsenmodul zusammenfallen,
wobei in dem diffraktiven optischen Element ein Brechungsindex eines Materials zwischen der der Objektebenenseite zugewandten Oberfläche und der diffraktiven Oberfläche N1 ist, ein Brechungsindex eines Materials zwischen der der Bildebenenseite zugewandten Oberfläche und der diffraktiven Oberfläche N2 ist und N1 und N2 jeweils die folgenden Bedingungen erfüllen: $1 , 62 < N 1 < 1 , 76 ;$ und $1 , 55 < N 2 < 1 , 64 ,$
wobei in dem diffraktiven optischen Element eine Abbezahl des Materials zwischen der der Objektebenenseite zugewandten Oberfläche und der diffraktiven Oberfläche für eine d-Linie eines Natriumspektrums V_{d}21 ist, eine Abbezahl des Materials zwischen der der Bildebenenseite zugewandten Oberfläche und der diffraktiven Oberfläche für die d-Linie des Natriumspektrums V_{d}22 ist und V_{d}21 und V_{d}22 jeweils die folgenden Bedingungen erfüllen: $30 < {V}_{d} 21 < 60 ;$ und $20 < {V}_{d} 22 < 40 ,$ und
wobei in dem diffraktiven optischen Element eine Brechkraft des Materials zwischen der der Objektebenenseite zugewandten Oberfläche und der diffraktiven Oberfläche P1 beträgt, eine Brechkraft des Materials zwischen der der Bildebenenseite zugewandten Oberfläche und der diffraktiven Oberfläche P2 beträgt und P1 und P2 die folgende Bedingung erfüllen: $- 4 < P 1 / P 2 < 4 .$

2. Kameraobjektiv nach Anspruch 1, wobei ein Blendenwert des Kameraobjektivs zwischen 2,0 und 1,2 liegt.

3. Kameraobjektiv nach einem der Ansprüche 1 bis 2, wobei mindestens eine der der Objektebenenseite bzw. der Bildebenenseite zugewandten Oberflächen des diffraktiven optischen Elements eine asphärische Oberfläche ist.

4. Kameraobjektiv nach einem der Ansprüche 1 bis 3, wobei das Linsenmodul die folgenden vier Linsen umfasst: eine dritte Linse (L3), eine vierte Linse (L4), eine fünfte Linse (L5) und eine sechste Linse (L6), wobei
eine Oberfläche der dritten Linse (L3), die der Objektebenenseite zugewandt ist, an der optischen Achse (X) konvex ist und die dritte Linse (L3) eine positive Brechkraft aufweist;
die vierte Linse (L4) meniskusförmig ist und eine Oberfläche der vierten Linse (L4), die der Objektebenenseite zugewandt ist, an der optischen Achse (X) konkav ist;
eine Oberfläche der fünften Linse (L5), die der Objektebenenseite zugewandt ist, an der optischen Achse (X) konvex ist und die der Objektebenenseite zugewandte Oberfläche an einer Stelle außerhalb der optischen Achse (X) einen Wendepunkt aufweist; und
eine Oberfläche der sechsten Linse (L6), die der Objektebenenseite zugewandt ist, an der optischen Achse (X) konvex ist, eine Oberfläche der sechsten Linse (L6), die der Bildebenenseite zugewandt ist, an der optischen Achse (X) konkav ist, die der Bildebenenseite zugewandte Oberfläche an einer Stelle außerhalb der optischen Achse (X) einen Wendepunkt aufweist und die sechste Linse (L6) eine negative Brechkraft aufweist.

5. Kameraobjektiv nach einem der Ansprüche 1 bis 3, wobei das Linsenmodul die folgenden fünf Linsen umfasst: eine dritte Linse (L3), eine vierte Linse (L4), eine fünfte Linse (L5), eine sechste Linse (L6) und eine siebte Linse (L7), wobei
eine Oberfläche der dritten Linse (L3), die der Objektebenenseite zugewandt ist, an der optischen Achse (X) konkav ist und die dritte Linse (L3) eine negative Brechkraft aufweist;
die vierte Linse (L4) meniskusförmig ist und eine Oberfläche der vierten Linse (L4), die der Objektebenenseite zugewandt ist, an der optischen Achse (X) konkav ist;
eine Oberfläche der fünften Linse (L5), die der Objektebenenseite zugewandt ist, an der optischen Achse (X) konkav ist;
eine Oberfläche der sechsten Linse (L6), die der Objektebenenseite zugewandt ist, an der optischen Achse (X) konvex ist, die der Objektebenenseite zugewandte Oberfläche an einer Stelle außerhalb der optischen Achse (X) einen Wendepunkt aufweist, eine Oberfläche der sechsten Linse (L6), die der Bildebenenseite zugewandt ist, an der optischen Achse (X) konkav ist, die der Bildebenenseite zugewandte Oberfläche an einer Stelle außerhalb der optischen Achse (X) einen Wendepunkt aufweist und die sechste Linse (L6) eine negative Brechkraft aufweist; und
eine Oberfläche der siebten Linse (L7), die der Objektebenenseite zugewandt ist, an der optischen Achse (X) konvex ist, eine Oberfläche der siebten Linse (L7), die der Bildebenenseite zugewandt ist, an der optischen Achse (X) konkav ist, die der Bildebenenseite zugewandte Oberfläche an einer Stelle außerhalb der optischen Achse (X) einen Wendepunkt aufweist und die siebte Linse (L7) eine negative Brechkraft aufweist.

6. Kameraobjektiv nach Anspruch 4 oder 5, wobei jede Linse in dem Kameraobjektiv ferner die folgenden Bedingungen erfüllt: $50 < {V}_{d} 1 < 60 ,$ wobei V_{d}1 eine Abbezahl der ersten Linse (L1) für die d-Linie des Natriumspektrums repräsentiert; $50 < {V}_{d} 3 < 60 ,$ wobei V_{d}3 eine Abbezahl der dritten Linse (L3) für die d-Linie des Natriumspektrums repräsentiert; $20 < {V}_{d} 4 < 30 ,$ wobei V_{d}4 eine Abbezahl der vierten Linse (L4) für die d-Linie des Natriumspektrums repräsentiert; $1 < f 1 / f 21 < 5 ,$ wobei f1 eine Brennweite der ersten Linse (L1) repräsentiert und f21 eine Brennweite der der Objektebenenseite zugewandten Oberfläche und der diffraktiven Oberfläche des diffraktiven optischen Elements repräsentiert; und $f 21 / f 22 < 1 ,$ wobei f22 eine Brennweite der der Bildebenenseite zugewandten Oberfläche und der diffraktiven Oberfläche des diffraktiven optischen Elements repräsentiert.

7. Kameramodul, wobei das Kameramodul das Kameraobjektiv nach einem der Ansprüche 1 bis 6 und einen Bildsensor umfasst, wobei
das Kameraobjektiv dazu ausgelegt ist, ein optisches Signal eines fotografierten Objekts zu bilden und das optische Signal auf den Bildsensor zu reflektieren; und
der Bildsensor dazu ausgelegt ist, das dem fotografierten Objekt entsprechende optische Signal in ein Bildsignal umzuwandeln.

8. Endgerät, wobei das Endgerät eine Anzeige und das Kameramodul nach Anspruch 7 umfasst und die Anzeige dazu ausgelegt ist, ein durch das Kameramodul fotografiertes Bild anzuzeigen.

## Revendications

1. Lentille de caméra, dans laquelle d'un plan objet à un plan image le long d'un axe optique (X), la lentille de caméra comprend : une première lentille (L1), une deuxième lentille (L2), et un module de lentille, la deuxième lentille (L2) est un élément optique diffractif, et l'élément optique diffractif se trouve entre la première lentille (L1) et le module de lentille, et est isolé de la première lentille (L1) et du module de lentille ;
une surface de la première lentille (L1) et faisant face au côté plan objet est une surface convexe au niveau de l'axe optique (X), une surface de la première lentille (L1) et faisant face au côté plan image est une surface concave au niveau de l'axe optique (X), et la première lentille (L1) a une puissance optique positive ;
l'élément optique diffractif comprend une surface faisant face au côté plan objet, une surface faisant face au côté plan image, et une surface diffractive entre les deux surfaces, la surface faisant face au côté plan objet étant une surface convexe au niveau de l'axe optique (X), la surface faisant face au côté plan image étant une surface concave au niveau de l'axe optique (X), la surface diffractive étant concave par rapport au plan côté image, et l'élément optique diffractif présentant un pouvoir focal positif et une propriété de dispersion anormale négative ;
le module de lentille comprend N lentilles disposées à des intervalles le long de l'axe optique (X), N étant un nombre entier supérieur ou égal à 3 et inférieur ou égal à 7, au moins une surface faisant face au côté plan objet et une surface faisant face au côté plan image de chacune des N lentilles étant une surface asphérique, et le module de lentille ayant une puissance optique positive ; et
des axes optiques de la première lentille (L1), de l'élément optique diffractif et des N lentilles du module de lentille se chevauchent mutuellement,
dans laquelle dans l'élément optique diffractif, un indice de réfraction d'un matériau entre la surface faisant face au côté plan objet et la surface diffractive est N1, un indice de réfraction d'un matériau entre la surface faisant face au côté plan image et la surface diffractive est N2, et N1 et N2 répondent respectivement aux conditions suivantes : $1 , 62 < N 1 < 1 , 76 ;$ et $1 , 55 < N 2 < 1 , 64 ,$
dans laquelle dans l'élément optique diffractif, un nombre d'Abbe du matériau entre la surface faisant face au côté plan objet et la surface diffractive sur une ligne d d'un spectre de sodium est V_{d}21, un nombre d'Abbe du matériau entre la surface faisant face au côté plan image et la surface diffractive sur la ligne d du spectre de sodium est V_{d}22, et V_{d}21 et V_{d}22 répondent respectivement aux conditions suivantes : $30 < {V}_{d} 21 < 60 ;$ et $20 < {V}_{d} 22 < 40 ,$ et
dans laquelle dans l'élément optique diffractif, une puissance optique du matériau entre la surface faisant face au côté plan objet et la surface diffractive est P1, une puissance optique du matériau entre la surface faisant face au côté plan image et la surface diffractive est P2, et P1 et P2 répondent à la condition suivante : $- 4 < P 1 / P 2 < 4 .$

2. Lentille de caméra selon la revendication 1, dans laquelle une valeur d'ouverture de la lentille de caméra est comprise entre 2,0 et 1,2.

3. Lentille de caméra selon l'une quelconque des revendications 1 à 2, dans laquelle au moins une de la surface faisant face au côté plan objet et de la surface faisant face au côté plan image de l'élément optique diffractif est une surface asphérique.

4. Lentille de caméra selon l'une quelconque des revendications 1 à 3, dans laquelle le module de lentille comprend les quatre lentilles suivantes : une troisième lentille (L3), une quatrième lentille (L4), une cinquième lentille (L5) et une sixième lentille (L6), dans laquelle
une surface de la troisième lentille (L3) et faisant face au côté plan objet est une surface convexe au niveau de l'axe optique (X), et la troisième lentille (L3) a une puissance optique positive ;
la quatrième lentille (L4) est en forme de ménisque, et une surface de la quatrième lentille (L4) et faisant face au côté plan objet est une surface concave au niveau de l'axe optique (X) ;
une surface de la cinquième lentille (L5) et faisant face au côté plan objet est une surface convexe au niveau de l'axe optique (X), et la surface faisant face au côté plan objet a un point de courbe inverse à un emplacement autre que l'axe optique (X) ; et
une surface de la sixième lentille (L6) et faisant face au côté plan objet est une surface convexe au niveau de l'axe optique (X), une surface de la sixième lentille (L6) et faisant face au côté plan image est une surface concave au niveau de l'axe optique (X), la surface faisant face au côté plan image ayant un point de courbe inverse à un emplacement autre que l'axe optique (X), et la sixième lentille (L6) a une puissance optique négative.

5. Lentille de caméra selon l'une quelconque des revendications 1 à 3, dans laquelle le module de lentille comprend les cinq lentilles suivantes : une troisième lentille (L3), une quatrième lentille (L4), une cinquième lentille (L5), une sixième lentille (L6) et une septième lentille (L7), dans laquelle
une surface de la troisième lentille (L3) et faisant face au côté plan objet est une surface concave au niveau de l'axe optique (X), et la troisième lentille (L3) a une puissance optique négative ;
la quatrième lentille (L4) est en forme de ménisque, et une surface de la quatrième lentille (L4) et faisant face au côté plan objet est une surface concave au niveau de l'axe optique (X) ;
une surface de la cinquième lentille (L5) et faisant face au côté plan objet est une surface concave au niveau de l'axe optique (X) ;
une surface de la sixième lentille (L6) et faisant face au côté plan objet est une surface convexe au niveau de l'axe optique (X), la surface faisant face au côté plan objet a un point de courbe inverse à un emplacement autre que l'axe optique (X), une surface de la sixième lentille (L6) et faisant face au côté plan image est une surface concave au niveau de l'axe optique (X), la surface faisant face au côté plan image ayant un point de courbe inverse à un emplacement autre que l'axe optique (X), et la sixième lentille (L6) a une puissance optique négative ; et
une surface de la septième lentille (L7) et faisant face au côté plan objet est une surface convexe au niveau de l'axe optique (X), une surface de la septième lentille (L7) et faisant face au côté plan image est une surface concave au niveau de l'axe optique (X), la surface faisant face au côté plan image ayant un point de courbe inverse à un emplacement autre que l'axe optique (X), et la septième lentille (L7) a une puissance optique négative.

6. Lentille de caméra selon la revendication 4 ou 5, dans laquelle chaque lentille de la lentille de caméra répond en outre aux conditions suivantes : $50 < {V}_{d} 1 < 60 ,$ où V_{d}1 représente un nombre d'Abbe de la première lentille (L1) sur la ligne d du spectre de sodium ; $50 < {V}_{d} 3 < 60 ,$ où V_{d}3 représente un nombre d'Abbe de la troisième lentille (L3) sur la ligne d du spectre de sodium ; $20 < {V}_{d} 4 < 30 ,$ où V_{d}4 représente un nombre d'Abbe de la quatrième lentille (L4) sur la ligne d du spectre de sodium ; $1 < f 1 / f 21 < 5 ,$ où f1 représente une distance focale de la première lentille (L1) et f21 représente une distance focale de la surface faisant face au côté plan objet et de la surface diffractive de l'élément optique diffractif ; et $f 21 / f 22 < 1 , où f 22$ représente une distance focale de la surface faisant face au côté plan image et de la surface diffractive de l'élément optique diffractif.

7. Module de caméra, dans lequel le module de caméra comprend la lentille de caméra selon
l'une quelconque des revendications 1 à 6 et un capteur d'image, dans lequel la lentille de caméra est configurée pour former un signal optique d'un objet photographié, et
réfléchir le signal optique vers le capteur d'image ; et
le capteur d'image est configuré pour convertir le signal optique correspondant à l'objet photographié en un signal d'image.

8. Terminal, dans lequel le terminal comprend un affichage et le module de caméra selon la revendication 7, et l'affichage est configuré pour afficher une image photographiée par le module de caméra.
